# EUROPEAN PATENT APPLICATION

(11) **EP 4 203 607 A1**
(43) Date of publication of application: **28.06.2023**
(21) Application number: 20955836.0
(22) Date of filing: 30.09.2020
(51) Int. Cl.: H04W 88/18

(54) **NETWORK EDGE COMPUTING METHOD AND COMMUNICATION APPARATUS**

(71) Applicant: Huawei Technologies Co., Ltd., Shenzhen, Guangdong 518129 (CN)
(72) Inventor: SUN, Fei, Shenzhen, Guangdong 518129 (CN); ZENG, Qinghai, Shenzhen, Guangdong 518129 (CN); LUO, Haiyan, Shenzhen, Guangdong 518129 (CN)
(74) Representative: Pfenning, Meinig & Partner mbB
(86) International application number: PCT/CN2020/119747
(87) International publication number: WO 2022/067816

(57) **Abstract**

This application discloses a network edge computing method and a communication apparatus, to ensure security of internal data on a network side. The method includes: a first network device determines a first computing capability of a first MEC function, where the computing capability of the first MEC function is for indicating a capability of the first MEC function to provide a computing service; the first network device sends first capability information, where the first capability information includes a capability parameter for determining the first computing capability, and the capability parameter includes one or more of a supported computing service type, a hardware parameter, and computing load; the first network device receives a first task request message from a first terminal, where the first task request message is for requesting the first MEC function to execute at least one computing task of the first terminal, and the at least one computing task is determined based on the first capability information; and the first network device sends the first task request message to the first MEC function.

## Description

### TECHNICAL FIELD

This application relates to the field of wireless communications technologies, and in particular, to a network edge computing method and a communication apparatus.

### BACKGROUND

Multi-access edge computing (multi-access edge computing, MEC) means that an MEC computing function is deployed close to a device side to provide faster services for users and achieve better network performance.

Based on an existing MEC architecture, an MEC computing function is deployed in a data network (data network, DN) connected to a core network side. A terminal device establishes a connection to a network-side device, and transmits data to a user plane function in a core network by using a radio access network. The user plane function may transmit the data to the DN, and the MEC computing function in the DN processes the data from the terminal, to share computing load on the network side.

Generally, a network-side computing service includes internal network data, and the MEC computing function deployed in the DN is usually provided by a third-party service provider. If the network-side computing service needs to be executed by using the MEC, the internal network data is provided for the third party, and consequently security is low. In addition, as a computing capability of the terminal device is improved, for example, a connected and autonomous vehicles (connected and autonomous vehicles, CAV) technology enables an in-vehicle terminal to have a strong computing capability, the terminal device may also provide a computing service. Based on the existing MEC architecture, in a process in which an MEC device executes a computing task on a network side, related data of the computing task needs to be exchanged with the core network, and consequently security of the internal data on the network side cannot be ensured.

### SUMMARY

This application provides a network edge computing method and a communication apparatus, to ensure security of internal data on a network side.

According to a first aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a first network device. The method includes:
a first network device determines a first computing capability of a first MEC function, where the computing capability of the first MEC function is for indicating a capability of the first MEC function to provide a computing service;
the first network device sends first capability information, where the first capability information includes a capability parameter for determining the first computing capability, and the capability parameter includes one or more of a supported computing service type, a hardware parameter, and computing load;
the first network device receives a first task request message from a first terminal, where the first task request message is for requesting the first MEC function to execute at least one computing task of the first terminal, and the at least one computing task is determined based on the first capability information; and
the first network device sends the first task request message to the first MEC function.

In this solution, the first MEC function is disposed inside the first network device or the first MEC function is independent of the first network device, that is, the MEC function is disposed on a network side, so that the terminal obtains a computing service nearby, thereby improving service experience of the terminal.

In a possible implementation, the first network device determines the computing capability of the first MEC function in the following three manners. This embodiment of this application is not limited in use of any one of the following three manners, and is flexible.

Manner 1: The first network device sends a first request message to the first MEC function, where the first request message is for requesting to obtain the computing capability of the first MEC function; and the first network device receives a first response message from the first MEC function, where the first response message includes a capability parameter, the capability parameter is for determining the first computing capability of the first MEC function, and the capability parameter includes one or more of a supported computing service type, a hardware parameter, and computing load.

In this solution, it may be considered that the first network device requests from the first MEC function to enquire the first computing capability of the first MEC function. To be specific, when the first computing capability needs to be obtained, the first request message is sent, so that unnecessary signaling overheads can be avoided.

Manner 2: The first network device sends a second request message to the first MEC function, where the second request message is for requesting to establish a connection to the first MEC function; and the first network device receives a second response message from the first MEC function, where the second response message includes a capability parameter, the capability parameter is for determining the first computing capability of the first MEC function, and the capability parameter includes one or more of a supported computing service type, a hardware parameter, and computing load.

In this solution, a request message for establishing a connection between the first network device and the first MEC function may be reused. To be specific, as long as the first network device requests to establish a connection to the first MEC function, the first MEC function notifies the first network device of the first computing capability of the first MEC function. In this way, no additional signaling needs to be exchanged for the MEC capability, to reduce signaling overheads as much as possible.

Manner 3: The first network device receives a first update message from the first MEC function, where the first update message includes related information of the first computing capability of the first MEC function.

In this solution, the computing capability of the first MEC function may be considered as a type of configuration information of the first MEC function. The first update message may be considered as an update message actively sent to the first network device after the configuration information of the first MEC function changes. The first MEC function actively notifies the first network device of the updated computing capability of the first MEC function. Therefore, the first network device can be prevented from sending an unnecessary first task request message, to reduce signaling overheads as much as possible.

In a possible implementation, the method further includes:
the first network device receives a third request message from the first terminal, where the third request message is for requesting to obtain a computing capability of an MEC function.

In this solution, the first network device may obtain the computing capability of the first MEC function when successfully receiving the third request message. To be specific, the computing capability of the first MEC function is obtained based on triggering of the first terminal, to avoid unnecessary signaling overheads as much as possible.

For example, the third request message is a network edge capability enquiry request message; or the third request message is an on-demand system message.

In a possible implementation, that the first network device sends first capability information includes:
the first network device broadcasts the first capability information. In this solution, the first network device may broadcast the obtained computing service capability on the network side, to notify any terminal of the computing service capability on the network side. In this way, any terminal may request, based on the computing capability on the network side, an appropriate MEC function to execute at least one computing task.

In a possible implementation, the method further includes:
the first network device sends, if the first network device determines that the first computing capability of the first MEC function does not satisfy a computing requirement of the at least one computing task, the third task request message to a second network device, where the third task request message is for requesting the second network device to execute the at least one computing task; and
the first network device receives a response message from the second network device in response to the third task request message.

In this solution, if the first network device determines that the computing capability of the first MEC function does not satisfy the computing requirement for executing the at least one computing task of the first terminal, the first network device may request the MEC function on the second network device side to execute the at least one computing task, to ensure that the computing task on the terminal side is smoothly executed as much as possible.

In a possible implementation, the method further includes:
the first network device determines whether a second computing capability of a second MEC function on a second network device side satisfies the computing requirement of the at least one computing task, where the second MEC function is disposed inside the second network device or the second MEC function is independent of the second network device, and the second computing capability of the second MEC function is notified by the second MEC function to the first MEC function.

In this solution, the first network device may learn the second computing capability of the second MEC function from the first MEC function, to send the third task request message to the second network device when the second computing capability satisfies the computing requirement of the at least one computing task. In this way, a case that a network side MEC function that cannot satisfy a computing requirement is requested to execute at least one computing task can be avoided, to ensure that less signaling is exchanged as much as possible.

In a possible implementation, the method further includes:
the first network device receives indication information from the first MEC function, where the indication information indicates a second terminal, and the second terminal provides a computing service; and
the first network device forwards the third task request message from the first terminal to the second terminal, where the third task request message is for requesting to execute the at least one computing task.

In this solution, because the second terminal can provide the computing service, the second terminal may be considered as an MEC function entity, to execute at least one computing task of the first terminal. The first network device may determine, based on the computing requirement of the at least one computing task and information such as a computing resource and computing load of the first MEC function or the second terminal, that the first MEC function or the second terminal executes the at least one computing task. In other words, computing resources of a network are considered comprehensively to properly allocate computing tasks and improve a system capacity.

According to a second aspect, an embodiment of this application provides a first network edge computing method. The method may be performed by a second communication apparatus. The second communication apparatus may be a communication device or a communication apparatus that can support a communication device in implementing a function required in the method, for example, a chip or a chip system. Description is provided below by using an example in which the communication device is a terminal device. The method includes:
a first terminal receives first capability information from a first network device, where the first capability information is for indicating a first computing capability of a first MEC function, the first computing capability is for indicating a capability of the first MEC function to provide a computing service, the first capability information includes a capability parameter for determining the first computing capability, and the capability parameter includes one or more of a supported computing service type, a hardware parameter, and computing load;
the first terminal sends a first task request message to the first network device or the first MEC function, where the first task request message is for requesting to execute at least one computing task; and
the first terminal receives admission information from the first MEC function, and sending related data of the at least one computing task to the first MEC function based on the admission information.

In this solution, the first MEC function is disposed inside the first network device or the first MEC function is independent of the first network device. The first terminal may request, based on the first computing capability of the first MEC function, the first MEC function to execute the at least one computing task, to improve service experience of the terminal.

In a possible implementation, the method further includes: the first terminal sends a second request message to the first network device, where the second request message is for requesting to obtain a computing capability of an MEC function.

In this solution, when having a computing requirement, the first terminal may actively trigger the first network device to obtain the first computing capability of the first MEC function, to determine, based on the first computing capability, whether to request the first MEC function to execute the at least one computing task. In this way, it can be ensured that the first terminal selects the first MEC function that can satisfy a computing requirement of the at least one computing task, to avoid unnecessary signaling overheads.

For example, the second request message is a network edge capability enquiry request message; or the second request message is an on-demand system message.

In a possible implementation, the method further includes:
the first terminal determines, based on the first capability information, a camped-on cell, where the camped-on cell supports a computing service required by the first terminal; or
the first terminal hands over from a current camped-on cell to a neighboring cell based on the first capability information, where the current camped-on cell does not satisfy a computing service requirement of the first terminal, and the neighboring cell satisfies the computing service requirement of the first terminal.

In this solution, the first terminal may preferentially select, based on the first computing capability of the first MEC function, a cell that supports the MEC computing service required by the terminal, to camp on. In this way, when the terminal needs to process a service, the terminal does not need to reselect the cell that can support the computing service of the terminal, to reduce an access delay.

According to a third aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is an MEC function. The method includes:
an MEC function determines that a second terminal executes at least one computing task of a first network device or the MEC function, where the second terminal can provide a computing service, and the MEC function is disposed inside the first network device or the MEC function is independent of the first network device;
the MEC function sends a session request message to the first network device, where the session request message is for indicating the first network device to establish a first transmission channel between the first network device and the MEC function and establish a second transmission channel from the first network device to the second terminal; and
the MEC function sends related data of the at least one computing task to the second terminal through the first transmission channel and the second transmission channel.

In this solution, because the second terminal can provide the computing service, the second terminal may be considered as an MEC function entity. For a network-side device, it may be determined that a computing task on a network side is executed by the second terminal. For example, the network-side device may determine, based on the computing requirement of the at least one computing task and information such as a computing resource and computing load of the first MEC function or the second terminal, that the first MEC function or the second terminal executes the at least one computing task. In other words, computing resources of a network are considered comprehensively to properly allocate computing tasks and improve a system capacity.

In a possible implementation, the method further includes:
the MEC function receives a registration request message from the second terminal, where the registration request message is for requesting the MEC function to register computing capability information of the second terminal, and the at least one computing task is determined based on the computing capability information.

In this solution, the second terminal that can provide the computing service may register related information of the second terminal with the MEC function, for example, identity information and computing capability information. In this way, the MEC function may select, based on the registration information, the appropriate second terminal to execute the at least one computing task.

According to a fourth aspect, an embodiment of this application provides a first network edge computing method. The method may be performed by a second communication apparatus. The second communication apparatus may be a communication device or a communication apparatus that can support a communication device in implementing a function required in the method, for example, a chip or a chip system. Description is provided below by using an example in which the communication device is a terminal device. The method includes:
a second terminal sends a registration request message to an MEC function, where the registration request message is for requesting the MEC function to register computing capability information of the second terminal, and the computing capability information is for indicating a computing service that canbe provided by the second terminal; and
the second terminal receives a first task request message sent by a first network device, where the first task request message is for requesting to execute at least one computing task of the first network device or the MEC function, and the at least one computing task is determined based on the computing capability information.

For technical effects achieved by the fourth aspect or the possible implementations of the fourth aspect, refer to the descriptions of the technical effects achieved by the third aspect or the possible implementations of the third aspect.

According to a fifth aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a first terminal. The method includes:
a first terminal determines a second terminal, where the second terminal can provide a computing service;
the first terminal sends a first task request message to the second terminal, where the first task request message is for requesting the second terminal to execute at least one computing task of the first terminal; and
the first terminal receives admission information from the second terminal, and sends related data of the at least one computing task to the second terminal based on the admission information.

In this solution, because the second terminal can provide the computing service, the second terminal may be considered as an MEC function entity. The first terminal may also request the second terminal to execute the at least one computing task. In other words, the first terminal may send the related data of the at least one computing task to the second terminal in a direct communication manner, to request the second terminal to execute the at least one computing task.

In a possible implementation, that the first terminal determines the second terminal includes:
the first terminal broadcasts MEC service information, where the MEC service information includes a computing requirement parameter of the at least one task; and
the first terminal receives a response message from a terminal in response to the MEC service information, and determines the terminal as the second terminal.

In this solution, the first terminal may broadcast a computing service requirement, and the second terminal that satisfies the computing service requirement may respond to the first terminal. In other words, when the first terminal receives a response from a terminal, the terminal may be considered as the second terminal.

In a possible implementation, that the first terminal determines the second terminal includes:
the first terminal sends the first task request message to a first network device; and
the first terminal receives a first response message from the first network device, where the first response message includes information about the second terminal.

In this solution, the first terminal may determine the second terminal by using the first network device.

According to a sixth aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a second terminal. The method includes:
a second terminal broadcasts computing capability information, where the second terminal can provide a computing service, and the computing capability information is for indicating a second computing capability of the second terminal; and
the second terminal receives a first task request message from a first terminal, where the first task request message is for requesting to execute at least one computing task of the first terminal.

In a possible implementation, the method further includes:
the second terminal sends the computing capability information to an MEC function.

For technical effects achieved by the sixth aspect or the possible implementations of the sixth aspect, refer to the descriptions of the technical effects achieved by the fifth aspect or the possible implementations of the fifth aspect.

According to a seventh aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a second terminal. The method includes:
a first MEC function receives a first task request message from a first terminal, where the first task request message is for requesting to execute a computing task of the first terminal; and
the first MEC function sends a second task request message to at least one edge computing device, where the second task request message corresponding to each edge computing device is for requesting the edge computing device to execute some computing subtasks in the computing task, a plurality of computing subtasks included in the computing task have a logical relationship, the at least one edge computing device includes a second MEC function and/or a second terminal, and the second terminal can provide a computing service.

In this solution, the computing task of the first terminal may be divided into the plurality of computing subtasks having the logical relationship, and the plurality of computing subtasks are executed by a plurality of edge computing devices. To be specific, the plurality of edge computing devices may execute the plurality of service function chain (service function chain, SFC) based computing subtasks, so that resource scheduling precision can be improved by reducing a task scheduling granularity, to improve computing resource utilization of a system.

In a possible implementation, the first request message includes one or more of the following information:
the plurality of computing subtasks, the logical relationship between the plurality of computing subtasks, and a service requirement of each of the plurality of computing subtasks.

In this solution, the first terminal may divide the computing task of the first terminal into the plurality of SFC-based computing subtasks based on a requirement, and notify the first MEC function of related information of the plurality of computing subtasks. In this way, the first MEC function may select, based on the information, at least one appropriate edge computing device to execute the plurality of computing subtasks, that is, properly use a computing resource of each edge computing device, to increase a system capacity.

In a possible implementation, the method further includes:
the first MEC function divides the computing task into the plurality of SFC-based computing subtasks, where the second task request message includes first information and second information, the first information is for indicating the plurality of computing subtasks, and the second information is for indicating the logical relationship between the plurality of computing subtasks.

In this solution, the first MEC function may divide the computing task of the first terminal into the plurality of SFC-based computing subtasks, and select, based on the information, at least one appropriate edge computing device to execute the plurality of computing subtasks, that is, properly use a computing resource of each edge computing device, to improve a system capacity.

It should be understood that the at least one edge computing device may include a plurality of MEC functions, and the plurality of MEC functions may exchange related information of the plurality of MEC functions with each other, for example, information such as a computing capability and computing load. In this way, each MEC function may select, based on the plurality of SFC-based computing subtasks, and a computing capability, computing load, and the like of each MEC function, a proper MEC function from the plurality of MEC functions to execute the plurality of computing subtasks, to improve computing resource utilization as much as possible.

For example, the method further includes: the first MEC function receives first information sent by a second MEC function, where the first information is for indicating a second computing capability of the second MEC function and a second computing load of the second MEC function. In this solution, the second MEC function notifies the first MEC function of a computing capability, computing load, and the like of the second MEC function.

For example, the method further includes: the first MEC function sends second information to a second MEC function, where the second information is for indicating a first computing capability of the first MEC function and a second computing load of the first MEC function. In this solution, the first MEC function notifies the second MEC function of a computing capability, computing load, and the like of the first MEC function.

In a possible implementation, the method further includes:
the first MEC function receives a registration request message from a second terminal, where the registration request message is for requesting to register a computing capability of the second terminal and computing load of the second terminal, and the second terminal can provide a computing service.

Similarly, the second terminal that can provide the computing service may also notify the first MEC function of a computing capability and computing load of the second terminal. In this way, the first MEC function may also select the appropriate second terminal to execute a plurality of computing subtasks of the first terminal.

According to an eighth aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a first terminal. The method includes:
a first terminal sends a first task request message to a first MEC function, where the first task request message is for requesting to execute a computing task of the first terminal.

In a possible implementation, the first request message includes one or more of the following information:
the plurality of computing subtasks, the logical relationship between the plurality of computing subtasks, and a service requirement of each of the plurality of computing subtasks.

For technical effects achieved by the eighth aspect or the possible implementations of the eighth aspect, refer to the descriptions of the technical effects achieved by the seventh aspect or the possible implementations of the seventh aspect.

According to a ninth aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a network device. The method includes:
a network device receives first information, where the first information is for indicating a mapping relationship between a protocol data unit (protocol data unit) PDU session established by a terminal and a computing server; and
the network device processes related data of at least one computing task from the terminal based on the mapping relationship.

In a possible implementation, the method includes:
a packet filtering rule PDR is configured for the network device, and the PDR is for ensuring that a data flow associated with the at least one computing task is mapped to a correct quality of service QoS flow.

According to a tenth aspect, an embodiment of this application provides a first network edge computing method. The method may be performed by a first communication apparatus. The first communication apparatus may be a communication device or a communication apparatus that can support a communication device in implementing a function required in the method, for example, a chip or a chip system. Description is provided below by using an example in which the communication device is a terminal. The method includes:
a terminal determines first information, where the first information includes a correspondence between a PDU session established by the terminal and a remote server, and the first information is for indicating an MEC function to process related data of at least one computing task of the terminal from the remote server; and
the terminal sends the first information to the MEC function.

In a possible implementation, the method further includes:
the terminal sends a first task request message to the MEC function, where the first task request message is for requesting the MEC function to execute the at least one computing task of the terminal, and the first task request message includes related information of the remote server.

In a possible implementation, the method further includes:
the terminal receives a first task request response message sent by the MEC function, where the first task request response message includes related information of a computing server selected by the MEC function.

According to an eleventh aspect, an embodiment of this application provides a communication apparatus. The communication apparatus has a function of implementing behavior in the method embodiment in any one of the first aspect to the tenth aspect. The function may be implemented by hardware, or may be implemented by hardware executing corresponding software. The hardware or the software includes one or more modules corresponding to the foregoing function.

In a possible implementation, the communication apparatus has a function of implementing behavior in the method embodiment of the first aspect, and the communication apparatus includes a transceiver module and a processing module, where
the processing module is configured to determine a first computing capability of a first MEC function, where the first computing capability of the first MEC function is for indicating a capability of the first MEC function to provide a computing service;
the transceiver module is configured to send first capability information, where the first capability information includes a capability parameter for determining the first computing capability, and the capability parameter includes one or more of a supported computing service type, a hardware parameter, and computing load;
the transceiver module is further configured to receive a first task request message from a first terminal, where the first task request message is for requesting the first MEC function to execute at least one computing task of the first terminal, and the at least one computing task is determined based on the first capability information; and
the transceiver module is further configured to send the first task request message to the first MEC function.

In a possible implementation, the communication apparatus has a function of implementing behavior in the method embodiment of the second aspect, and the communication apparatus includes a transceiver module and a processing module, where
the transceiver module is configured to receive first capability information from a first network device, where the first capability information is for indicating a first computing capability of a first MEC function, the first computing capability is for indicating a computing service that can be provided by the first MEC function, and the first MEC function is disposed inside the first network device or the first MEC function is independent of the first network device;
the transceiver module is further configured to send a first task request message generated by the processing module to the first network device or the first MEC function, where the first task request message is for requesting to execute at least one computing task; and
the transceiver module is further configured to: receive admission information, and send related data of the at least one computing task to the first MEC function based on the admission information.

In a possible implementation, the communication apparatus has a function of implementing behavior in the method embodiment of the third aspect, and the communication apparatus includes a transceiver module and a processing module, where
the processing module is configured to determine that a second terminal executes at least one computing task of a first network device or the communication apparatus, where the second terminal can provide a computing service, and the communication apparatus is disposed inside the first network device or the communication apparatus is independent of the first network device;
the transceiver module is configured to send a session request message to the first network device, where the session request message is for indicating the first network device to establish a first transmission channel between the first network device and the communication apparatus and establish a second transmission channel from the first network device to the second terminal; and
the transceiver module is configured to send related data of the at least one computing task to the second terminal through the first transmission channel and the second transmission channel.

In a possible implementation, the communication apparatus has a function of implementing behavior in the method embodiment of the fourth aspect, and the communication apparatus includes a transceiver module and a processing module, where
the transceiver module is configured to send a registration request message to an MEC function, where the registration request message is for requesting the MEC function to register computing capability information of the communication apparatus, and the computing capability information is for indicating a computing service that can be provided by the communication apparatus; and
the transceiver module is further configured to receive a first task request message sent by a first network device, where the first task request message is for requesting to execute at least one task of the first network device or the MEC function, and the at least one computing task is determined based on the computing capability information.

In a possible implementation, the communication apparatus has a function of implementing behavior in the method embodiment of the fifth aspect, and the communication apparatus includes a transceiver module and a processing module, where
the processing module is configured to determine a second terminal, where the second terminal can provide a computing service;
the transceiver module is configured to send a first task request message to the second terminal, where the first task request message is for requesting the second terminal to execute at least one computing task of the communication apparatus; and
the transceiver module is configured to receive admission information from the second terminal, and sends related data of the at least one computing task to the second terminal based on the admission information.

In a possible implementation, the communication apparatus has a function of implementing behavior in the method embodiment of the sixth aspect, and the communication apparatus includes a transceiver module and a processing module, where
the transceiver module is configured to broadcast the computing capability information determined by the processing module, where the communication apparatus can provide a computing service, and the computing capability information is for indicating a second computing capability of the communication apparatus; and
the transceiver module is further configured to receive a first task request message from a first terminal, where the first task request message is for requesting to execute at least one computing task of the first terminal.

In a possible implementation, the communication apparatus has a function of implementing behavior in the method embodiment of the seventh aspect, and the communication apparatus includes a transceiver module and a processing module, where
the transceiver module is configured to receive a first task request message from a first terminal, where the first task request message is for requesting to execute a computing task of the first terminal; and
the transceiver module is further configured to send a second task request message generated by the processing module to at least one edge computing device, where the second task request message corresponding to each edge computing device is for requesting the edge computing device to execute some computing subtasks in the computing task, a plurality of computing subtasks included in the computing task have a logical relationship, the at least one edge computing device includes a second MEC function and/or a second terminal, and the second terminal can provide a computing service.

In a possible implementation, the communication apparatus has a function of implementing behavior in the method embodiment of the eighth aspect, and the communication apparatus includes a transceiver module and a processing module, where
the transceiver module is configured to send a first task request message to a first MEC function, where the first task request message is for requesting to execute a computing task of the communication apparatus.

In a possible implementation, the communication apparatus has a function of implementing behavior in the method embodiment of the ninth aspect, and the communication apparatus includes a transceiver module and a processing module, where
the transceiver module is configured to receive first information, where the first information is for indicating a mapping relationship between a protocol data unit (protocol data unit) PDU session established by a terminal and a computing server; and
the processing module is configured to process related data of at least one computing task from the terminal based on the mapping relationship.

In a possible implementation, the communication apparatus has a function of implementing behavior in the method embodiment of the tenth aspect, and the communication apparatus includes a transceiver module and a processing module, where
the processing module is configured to determine first information, where the first information includes a correspondence between a PDU session established by the communication apparatus and a remote server, and the first information is for indicating an MEC function to process related data of at least one computing task of the communication apparatus from the remote server; and
the transceiver module is configured to send the first information to the MEC function.

According to a twelfth aspect, an embodiment of this application provides a communication apparatus, including at least one processor. The processor may be configured to execute a computer program to implement the method in any possible implementation of the first aspect to the tenth aspect. Optionally, the communication apparatus further includes a communication interface. The processor is coupled to the communication interface. The communication interface is configured to input and/or output information, and the information includes at least one of the computer program, instructions, and data. Optionally, the communication apparatus further includes a memory. The memory is configured to store at least one of the computer program, instructions, and data. The processor is coupled to the memory.

In an implementation, the communication apparatus is a terminal device or a network device. When the communication apparatus is a terminal device or a network device, the communication interface may be a transceiver or an input and/or output interface. Optionally, the transceiver may be a transceiver circuit, or may be implemented by using an antenna, a feeder, a codec, or the like in the terminal device or the network device. Optionally, the input and/or output interface may be an input and/or output circuit.

In another implementation, the communication apparatus is a chip or a chip system configured in a terminal device or a network device. When the communication apparatus is a chip or a chip system configured in a terminal device or a network device, the communication interface may be an input and/or output interface, an interface circuit, an output circuit, an input circuit, a pin, a related circuit, or the like. The processor may alternatively be a processing circuit or a logic circuit.

According to a thirteenth aspect, an embodiment of this application provides a chip system. The chip system includes a processor, and may further include a memory, configured to implement the method performed by the communication apparatus in any one of the first aspect to the tenth aspect. In a possible implementation, the chip system further includes the memory, configured to store program instructions and/or data. The chip system may include a chip, or may include a chip and another discrete component.

According to a fourteenth aspect, an embodiment of this application provides a communication system, where the communication system includes one or more communication apparatuses according to the ninth aspect to the thirteenth aspect.

According to a fifteenth aspect, this application provides a computer-readable storage medium. The computer-readable storage medium stores a computer program, and when the computer program is run, the method performed by the communication apparatus in the foregoing aspects is implemented.

According to a sixteenth aspect, a computer program product is provided, where the computer program product includes computer program code, and when the computer program code is run, the method performed by the communication apparatus in the foregoing aspects is performed.

### BRIEF DESCRIPTION OF DRAWINGS

FIG. 1 is a schematic diagram of an MEC application layer architecture;
FIG. 2 is a schematic diagram of an architecture of an MEC deployment in the prior art;
FIG. 3 is a schematic diagram of an architecture of an MEC network according to an embodiment of this application;
FIG. 4 is a schematic diagram of a network architecture of an MEC management function according to an embodiment of this application;
FIG. 5 shows a protocol architecture of an embedded MEC management function according to an embodiment of this application;
FIG. 6 shows a protocol architecture of an independent MEC management function according to an embodiment of this application;
FIG. 7 is a flowchart of a first network edge computing method according to an embodiment of this application;
FIG. 7a is a schematic flowchart of determining a computing capability of an MEC network element by a network device according to an embodiment of this application;
FIG. 8 is a flowchart of a second network edge computing method according to an embodiment of this application;
FIG. 9 is a flowchart of a third network edge computing method according to an embodiment of this application;
FIG. 10 is a flowchart of a fourth network edge computing method according to an embodiment of this application;
FIG. 11 is a flowchart of a fifth network edge computing method according to an embodiment of this application;
FIG. 12 is a flowchart of a sixth network edge computing method according to an embodiment of this application;
FIG. 13 is a flowchart of a seventh network edge computing method according to an embodiment of this application;
FIG. 14 is a flowchart of an eighth network edge computing method according to an embodiment of this application;
FIG. 15 shows an SFC-based MEC method according to an embodiment of this application;
FIG. 16 is a flowchart of intermediate rendering signaling interaction according to an embodiment of this application and based on an existing MEC architecture;
FIG. 17 is a flowchart of intermediate rendering signaling interaction based on an MEC architecture according to an embodiment of this application;
FIG. 18 is a schematic flowchart of processing a packet by a computing server according to an embodiment of this application;
FIG. 19 is a schematic flowchart of processing a packet by a computing server according to an embodiment of this application;
FIG. 20 is a schematic flowchart of processing a packet by a computing server according to an embodiment of this application;
FIG. 21 is a schematic flowchart of D2D local rendering according to an embodiment of this application;
FIG. 22 is a schematic diagram of a structure of a communication apparatus according to an embodiment of this application; and
FIG. 23 is a schematic diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

To help a person skilled in the art understand the technical solutions provided in embodiments of this application, some terms in embodiments of this application are first explained and described.
(1) A network-side device, also referred to as a network device, is an entity configured to transmit or receive a signal on a network side, is a device that connects a terminal device to a wireless network in a communication system, and is generally connected to a core network by using a wired link (for example, an optical fiber cable), for example, a next generation base station (next generation Node B, gNodeB). The network-side device may be responsible for receiving data from the core network and forwarding the data to a wireless backhaul device, or receiving data from a wireless backhaul device and forwarding the data to the core network. The network device may be a device configured to communicate with a mobile device. The network device may be an AP in a wireless local area network (wireless local area networks, WLAN) or an evolved NodeB (evolved Node B, eNB or eNodeB) in long term evolution (long term evolution, LTE), or may include a next generation node B (next generation node B, gNB) in a 5G NR system, a relay station, an access point, an in-vehicle device, a wearable device, a network device in a future 5G network, a network device in a future evolved public land mobile network (public land mobile network, PLMN) network, or a gNodeB/gNB in an NR system. The following uses an example in which a network-side device is a gNB.

The gNB may include an antenna, a baseband unit (base band unit, BBU), and a remote radio unit (remote radio unit, RRU). The BBU may be connected to the RRU through a common public radio interface (common public radio interface, CPRI), an enhanced CPRI (enhance CPRI, eCPRI), or the like, and the RRU may be connected to an antenna by using a feeder. The antenna may be a passive antenna, and is separated from the RRU, and may be connected to each other by using a cable. Alternatively, the antenna may be an active antenna unit (active antenna unit, AAU), that is, an antenna unit of the AAU and the RRU are integrated together. The AAU implements some physical layer processing functions, radio frequency processing, and a function related to an active antenna.

In some deployments, the gNB may include a central unit (central unit, CU) and a distributed unit (distributed unit, DU). The CU implements some functions of the gNB, and the DU implements some functions of the gNB. For example, the DU may be configured to implement receiving and sending of a radio frequency signal, conversion between a radio frequency signal and a baseband signal, and some baseband processing. The CU may be configured to perform baseband processing, control a base station, and the like. In some embodiments, the CU is responsible for processing non-real-time protocols and services, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

(2) A terminal device may also be referred to as a terminal, and may be a wireless terminal device that can receive scheduling and an indication of a network device. The terminal device may be a device that provides a user with voice and/or data connectivity, a handheld device having a wireless connection function, or another processing device connected to a wireless modem.

The terminal device may communicate with one or more core networks or the Internet via a radio access network (for example, radio access network, RAN), and exchange voice and/or data with the RAN. The terminal device may be user equipment (user equipment, UE), a wireless terminal device, a mobile terminal device, a device-to-device (device-to-device, D2D) communication terminal device, a V2X terminal device, a machine-to-machine/machine-type communication (machine-to-machine/machine-type communications, M2M/MTC) terminal device, an Internet of things (Internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (or referred to as a "cellular" phone), a computer with a mobile terminal device, or a portable, pocket-sized, handheld, or computer built-in mobile apparatus. In another example, the terminal may include a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and a terminal device in a future evolved public land mobile network (public land mobile network, PLMN), a vehicle device in vehicle to everything (vehicle to everything, V2X), a customer premises equipment (customer premises equipment, CPE), or the like. In still another example, the terminal may include a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). Alternatively, the terminal may include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that canbe directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

In embodiments of this application, the network device and the terminal may be deployed on land, including an indoor or outdoor device, a handheld device, or a vehicle-mounted device; may be deployed on a water surface; or may be deployed on an aircraft, a balloon, or a satellite in the air. Application scenarios of the network device and the terminal are not limited in embodiments of this application.

(3) MEC can be understood as an edge -based big data processing platform. To be specific, a traditional data center is divided into various small data centers and the small data centers are placed on edge nodes (servers) of a network, to be closer to users, to provide faster services for the users and achieve better network performance. In other words, the MEC offloads (offloading) computing load on a terminal side to computing server at a network edge, to provide computing, storage, and processing capabilities similar to those on a cloud at the network edge.

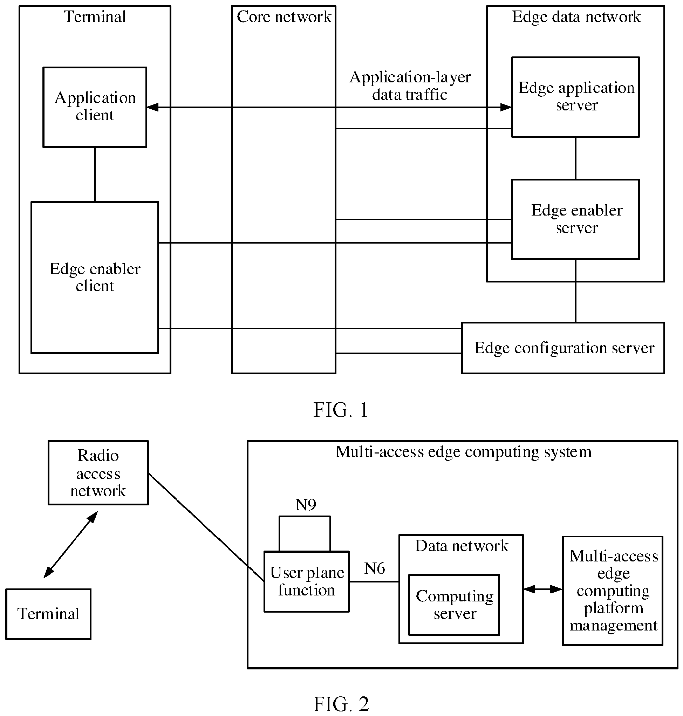

FIG. 1 is a schematic diagram of an MEC application layer architecture. A terminal side includes one or more application clients (application client) and one or more edge enabler clients (edge enabler client, EEC). The application client may be considered as an application residing on a terminal, and is configured to execute a client function. A network edge side includes an edge data network (edge data network, EDN) and an edge configuration server (edge configuration server, ECS). The EDN is a local data network, including an edge application server (edge application server, EAS) and an edge enabler server (edge enabler server, EES). The EES is configured to provide support functions required by the EAS and the EEC. For example, the EES may provide configuration information, to exchange application-layer data traffic with the EAS; the EES may also provide related information of the EAS to the EEC; and the EES supports API invocation and exposure functions specified in 3GPP TS 23.222. The EEC is configured to provide support functions required by the application client. For example, the EEC is configured to obtain and provide configuration information, to exchange application-layer data traffic with the EAS. The EEC is configured to discover an available EAS in the EDN. The ECS is configured to provide a support function required for the EEC to connect to the EES. For example, the ECS provides edge configuration information to the EEC, for example, including information required for the EEC to connect to the EES, for example, service area information applicable to a local area data network (local area data network, LADN), and in another example, may further include information about establishing a connection between the ECS and the EES, for example, a uniform resource identifier (uniform resource identifier, URI). The EAS is an application server deployed in the EDN and is configured to execute a server function. The EAS may use a core network capability in different manners. For example, if the EAS is an entity trusted by a core network, the EAS may directly invoke a core network function API; the EAS may invoke the core network capability by using the EES; or the EAS may invoke the core network capability by using a capability exposure function (for example, an SCEF or NEF network element).

The terminal side may interact with the edge data network via the core network. For example, the application client connects to the EAS and transmits application-layer data traffic (which may also be considered as a computing task) to the EAS. In this way, services of an application can be used by taking advantage of edge computing. A server function in the application may be used only as the EAS. However, if the server function of the application is available as both an edge application server and an application server residing on the cloud, functions of the edge application server and the application server may be different. In addition, if the edge application server and the application server have different functions, application-layer data traffic may also be different.

The foregoing describes some concepts in embodiments of this application, and the following describes technical characteristics in embodiments of this application.

With development of diversified application services, computing services of a terminal are in a development trend of becoming diversified and massive, and the terminal is required to support a higher computing amount. For example, online games, voice recognition, facial recognition, augmented reality (augmented reality, AR), and virtual reality (virtual reality, VR) require terminals to have stronger computing capabilities. However, limited by a battery capacity and a computing capability of a terminal, it is difficult for the computing capability of the terminal to satisfy increasing service requirements. Therefore, based on a cloud computing technology, some computing services of the terminal may be offloaded to the cloud, and the cloud is configured to execute the computing services of the terminal. However, because the terminal is far away from the cloud, a higher service response delay is caused, and load of a backhaul link is increased.

Therefore, it is proposed that computing tasks of the terminal may be offloaded to a radio access Network (radio access network, RAN) side, and therefore the RAN is required to support a higher computing amount, to satisfy the increasing service requirements. For example, the computing amount supported by the RAN is required to satisfy requirements of internal network optimization services such as a traffic steering (Traffic Steering) service, a quality of experience (quality of experience, QoE) optimization (optimization) service, and a massive multiple-input multipleoutput (massive-multi - input multi - output, M-MIMO) optimization (optimization) service. Generally, the internal network optimization services need to be implemented by using artificial intelligence (artificial intelligence, AI). As a result, the computing load on the RAN side is sharply increased, and it is difficult for the traditional RAN side to satisfy the increasing service requirements.

Then, a concept of MEC is proposed. In other words, the computing server at the network edge executes computing tasks on the terminal side and provides computing, storage, and processing capabilities similar to those on the cloud at the network edge. MEC can be understood as an edge-based big data processing platform. To be specific, a traditional data center is divided into various small data centers and the small data centers are placed on edge nodes (servers) of a network, to be closer to users, to provide faster services for the users and achieve better network performance.

FIG. 2 is a schematic diagram of an architecture of an MEC deployment. An MEC system may include one or more computing servers deployed in a data network (data network, DN), and an MEC management platform. The MEC management platform may be configured to manage the one or more computing servers to process data in the DN. A terminal establishes a connection to a RAN, and may transmit data to a user plane function (user plane function, UPF) in a core network via the RAN. The UPF may transmit the data from the terminal to the DN through an N6 interface. In other words, the DN may exchange user plane application-layer data with the user plane function (user plane function, UPF) in the core network through the N6 interface, to obtain the data from the terminal. The one or more computing servers in the DN may process the data from the terminal, to share computing load on a terminal side.

Generally, an internal network optimization service on a RAN side is used as an example. A related computing service includes internal network data, and the computing server deployed in the DN is usually provided by a third-party service provider. If the computing service on the RAN side needs to be executed by using the MEC, the internal network data is provided for the third party, and consequently security is low. In addition, as a computing capability of the terminal device is improved, the terminal device may also provide a computing service. In other words, the terminal device may also serve as a network edge node, and can share some computing tasks on the RAN side, to improve an overall computing capacity of the system. However, the architecture shown in FIG. 2 does not support offloading of a computing task on the RAN side to a UE side.

In view of this, embodiments of this application provide a network edge computing method and an MEC network architecture. In the MEC network architecture, an MEC management function is introduced on a network side (also referred to as a RAN side in this specification) and a terminal side (also referred to as a UE side in this specification). Based on the MEC network architecture, a computing task on the RAN side may be offloaded to the UE side for execution, so that computing load on the RAN side can be reduced. Based on the MEC network architecture, a computing task on the UE side may be offloaded to the RAN side for execution, to reduce computing load on the UE side. Further, because both the RAN side and the UE side may provide MEC, computing resources of a network system may be flexibly scheduled based on actual computing load on the RAN side and the UE side and an MEC computing capability, thereby improving utilization of the computing resources of the system. In addition, because the MEC management function is introduced on the RAN side, and internal data of the RAN may be processed on the RAN side and does not need to be provided for the third-party MEC computing server shown in FIG. 2, security of internal network data on the RAN side can be ensured. It should be noted that an MEC computing task is used as an example in this embodiment of this application. However, a type of the computing task is not limited in this embodiment of this application, and the computing task may also be another type of computing task. The MEC computing capability is a computing capability of an MEC network element, and may be for indicating an MEC computing service that can be provided by the MEC network element. For simplicity and convenience, the MEC computing capability is collectively referred to as a computing capability below.

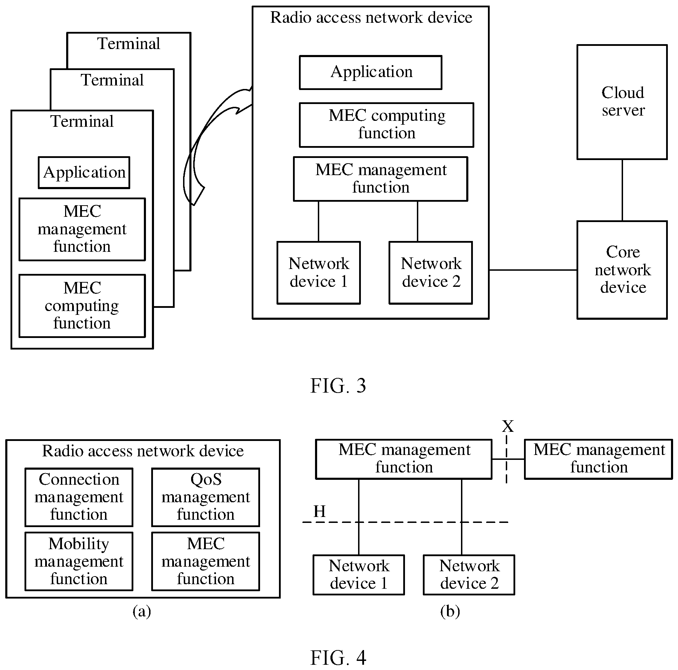

FIG. 3 is a schematic diagram of an architecture of an MEC network according to an embodiment of this application. The MEC network includes one or more terminal devices, a RAN-side device, a core network device, and a cloud server. The RAN-side device may include one or more network devices. In FIG. 3, an example in which a network device 1 and a network device 2 are included is used. Compared with the prior art, in the architecture shown in FIG. 3, an MEC management function and at least one MEC computing function are disposed on a terminal side, and an MEC management function and at least one MEC computing function are also disposed on a RAN side. It should be understood that the MEC computing function is software, hardware, or a combination of software and hardware that is configured to provide a computing service. In embodiments of this application, the MEC management function may also be considered as an MEC management network element that manages a virtualized resource of the MEC computing function.

The MEC management function located on the RAN side may manage the MEC computing function, and manage a computing task (which may also be referred to as an MEC task) to be executed. For example, the MEC management function may allocate a to-be-executed computing task to one or more MEC computing functions, to maximize utilization of computing resources of a system. RAN capability exposure (RAN exposure) provides radio network information (radio network information, RNI) to the MEC computing function, and API release and RNI access management through a standard application programming interface (application programming interface, API).

The MEC management function located on the terminal side can be configured to discover the MEC computing function and manage computing tasks on the terminal side, for example, may offload some or all computing tasks on the terminal side to one or more MEC computing functions on the RAN side, or may allocate some or all computing tasks on the terminal side to one or more MEC computing functions on the terminal side, or may be configured to manage computing tasks from another terminal.

It should be noted that the MEC management function and/or the MEC computing function may be disposed inside the RAN-side device or the terminal device, or may be independent of the RAN-side device or the terminal device. For example, the MEC management function and the MEC computing function are independent of the RAN-side device, or the MEC management function is disposed inside the RAN-side device, and the MEC computing function is independent of the RAN-side device. In another example, the MEC management function is disposed inside the terminal device, and the MEC computing function may be understood as a service function provided by an application of the terminal device (or may be understood as an upper layer of the terminal device). In FIG. 3, an example in which the MEC management function is located inside the terminal device and the MEC management function is located inside the network-side device is used. It should be understood that the MEC management function and the MEC computing function are independent of the RAN-side device. In this case, the MEC management function and the MEC computing function may be used as a logical entity, and may be referred to as an MEC network element in this specification for ease of description.

FIG. 4 is a schematic diagram of a network architecture of an MEC management function according to an embodiment of this application. FIG. 4 shows a network architecture of an embedded MEC management function (that is, the MEC management function is disposed inside a device) and a network architecture of an MEC management function used as an independent logical entity (that is, the MEC management function is disposed outside a device). In FIG. 4, an example in which an MEC management function is disposed on a RAN side is used.

As shown in (a) in FIG. 4, the MEC management function is an embedded MEC management function, that is, the MEC management function is disposed inside a RAN-side device. As a part of the RAN-side device, the MEC management function may manage an MEC computing function of the RAN-side device, for example, indicate the MEC computing function to execute a computing task on a RAN side or a terminal side. It should be understood that the RAN-side device may further include a connection management function, a mobility management function, and a quality of service (quality of service, QoS) management function.

As shown in (b) in FIG. 4, the MEC management function is an independent logical entity, that is, the MEC management function is disposed outside a RAN-side device. The MEC management function may exchange information with one or more RAN-side devices. For example, the MEC management function may exchange information with a network device 1 or a network device 2 through an H interface. A terminal device may exchange information with an MEC network element via a RAN-side device. It should be understood that if there are a plurality of MEC network elements in a network, the plurality of MEC network elements may exchange information with each other through an X interface between the MEC network elements. It should be noted that the H interface in this specification is an interface between network devices. A specific name of the H interface is not limited in this embodiment of this application. Similarly, the X interface is an interface between MEC network elements. A specific name of the X interface is not limited in this embodiment of this application.

To execute a computing task, the MEC computing function needs to exchange, with a RAN-side device or a terminal device, related information for executing the computing task, for example, data related to the computing task (which may be briefly referred to as computing task data). For example, the RAN-side device may exchange computing task data with the MEC computing function. In this embodiment of this application, the MEC management function is disposed inside the RAN-side device. Compared with the prior art in which the MEC management function is disposed on the core network side, interaction between the RAN-side device and the MEC computing function is implemented inside the RAN side, so that security of data of the RAN-side device can be ensured. In addition, interaction between the RAN-side device and the MEC computing function is implemented inside the RAN side. Compared with interaction between the RAN-side device and the MEC computing function on the core network side, an interaction delay can be reduced.

It should be understood that, the MEC management function on the RAN side and the RAN-side device need to establish a communication interface, and complete configuration of bearer mapping, to perform data transmission between the MEC management function and the RAN-side device based on the configuration. The communication interface needs to support a user plane protocol layer and a control plane protocol layer. For the terminal device, a control plane is implemented by using an MEC management function on a terminal side and an MEC management function on a RAN side, and a user plane may carry an existing signaling radio bearer (signaling radio bearer, SRB) or data radio bearer (data radio bearer) DRB, or a newly defined type of RB.

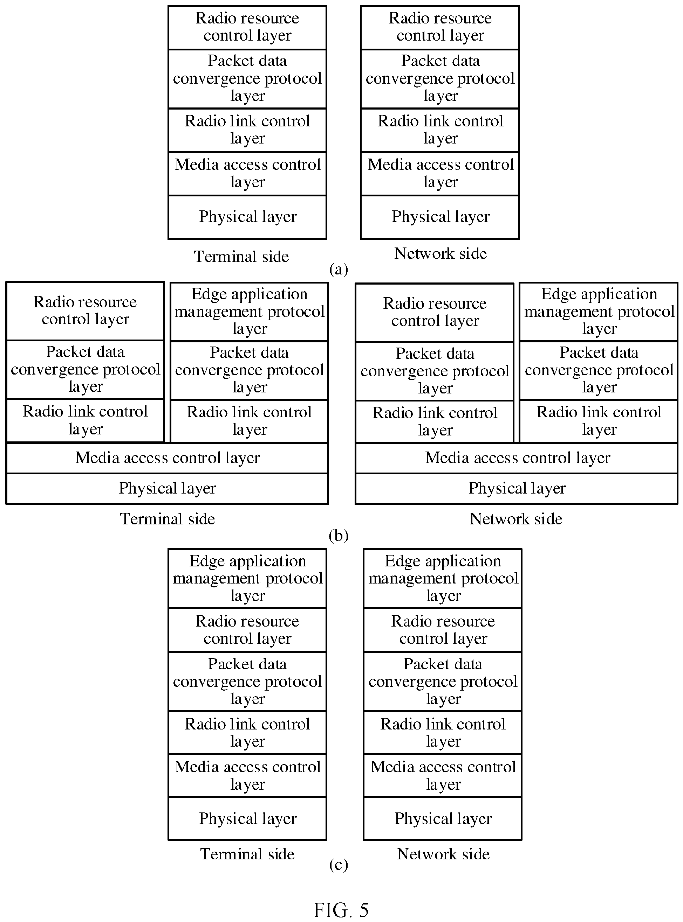

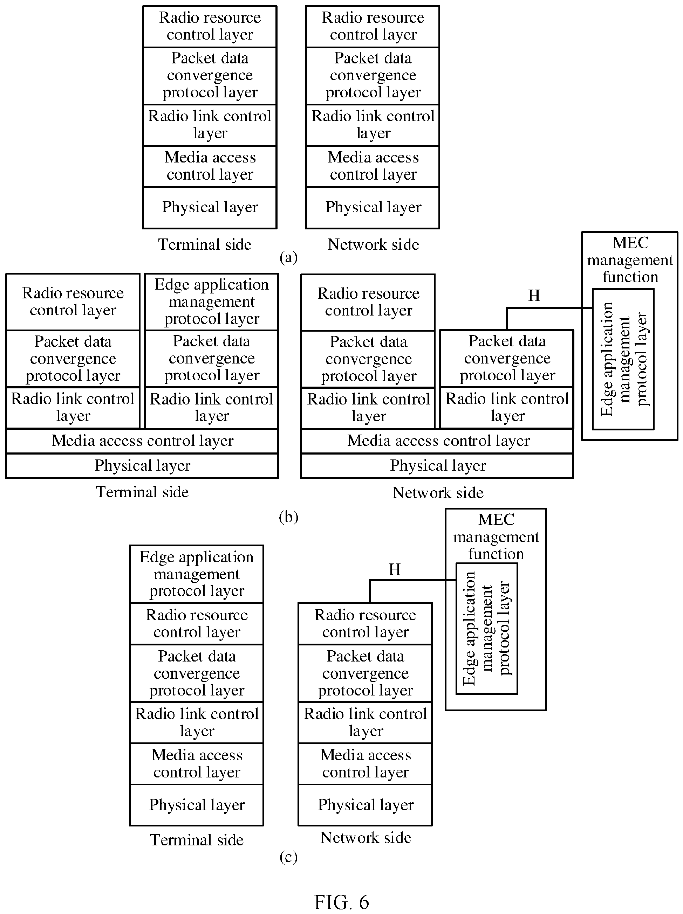

Referring to FIG. 5 and FIG. 6, FIG. 5 shows a protocol architecture of an embedded MEC management function, and FIG. 6 shows a protocol architecture of an independent MEC management function.

As shown in (a) in FIG. 5, a communication interface is established between a terminal side and a network side, and peer protocol layers include a physical (physical, PHY) layer, a media access control (media access control, MAC) layer, a radio link control (radio link control, RLC) layer, a packet data convergence protocol (packet data convergence protocol, PDCP) layer, and a radio resource control (radio resource control, RRC) layer. The terminal side and the network side may reuse an existing RRC layer protocol to exchange signaling for implementing an MEC function. For example, some RRC signaling may be newly defined to exchange related information for implementing an MEC function (which may also be briefly referred to as MEC function related information in this specification); or existing RRC signaling may continue to be used, a new information element is added to the existing RRC signaling, and the new information element carries related information for implementing an MEC function.

As shown in (b) in FIG. 5, a difference from (a) in FIG. 5 lies in that a new protocol layer parallel to the RRC layer, for example, an edge application management protocol (edge application control, EAC) layer, may be introduced. In other words, peer protocol layers on the terminal side and the network side include a PHY layer, a MAC layer, an RLC layer, a PDCP layer, an RRC layer, and an EAC layer parallel to the RRC layer. In this protocol architecture, a new signaling bearer (radio bearer, RB) type may be introduced, for example, an MEC-RB type. The MEC-RB type is similar to the SRB type, and may be for transmitting related information for implementing an MEC function.

As shown in (c) in FIG. 5, a difference from (a) in FIG. 5 lies in that a new protocol layer, for example, an EAC layer, may be introduced on an RRC layer. In other words, peer protocol layers on the terminal side and the network side include a PHY layer, a MAC layer, an RLC layer, a PDCP layer, an RRC layer, and an EAC layer. In this protocol architecture, the EAC layer may be for negotiating an MEC function, and negotiated related information may be carried in an RRC message as a container (container), that is, the MEC function related information is transparent to the network side.

The foregoing describes the protocol architecture of the embedded MEC management function with reference to FIG. 5, and the following describes a protocol architecture of an independent MEC management function with reference to FIG. 6.

As shown in (a) in FIG. 6, same as (a) in FIG. 5, peer protocol layers on the terminal side and the network side include a PHY layer, a MAC layer, an RLC layer, a PDCP layer, and an RRC layer. The terminal side and the network side may reuse an existing RRC layer protocol to exchange signaling for implementing an MEC function. For example, some RRC signaling may be newly defined to exchange related information for implementing an MEC function; or existing RRC signaling may continue to be used, a new information element is added to the existing RRC signaling, and the new information element carries related information for implementing an MEC function. A difference lies in that after receiving MEC function related information from the terminal side, the network side may forward the MEC function related information to the MEC management function. Correspondingly, the MEC management function may also send the MEC function related information to the network side, and the MEC function related information is sent to the terminal device via the network side. It should be understood that, after receiving the MEC function related information from the terminal side, the network side may further process the MEC function related information, for example, perform format conversion on the MEC function related information, that is, convert the MEC function related information adapted to the RRC layer protocol into MEC function related information adapted to the H interface, and then send the MEC function related information to the MEC management function through the H interface. Similarly, after receiving the MEC function related information from the MEC management function, the network side may further process the MEC function related information, for example, perform format conversion on the MEC function related information, that is, convert the MEC function related information adapted to the H interface into MEC function related information adapted to the RRC layer protocol, and then send the MEC function related information to the terminal side through RRC signaling.

As shown in (b) in FIG. 6, peer protocol layers on the terminal side and the network side include a PHY layer, a MAC layer, an RLC layer, a PDCP layer, an RRC layer, and an EAC layer parallel to the RRC layer. A difference from (b) in FIG. 5 lies in that after receiving MEC function related information from the terminal side carried in EAC signaling, the network side sends the MEC function related information to the MEC management function through the H interface. Correspondingly, the MEC management function sends the MEC function related information to the network side through the H interface, and then the network side sends the MEC function related information to the terminal device through EAC signaling.

As shown in (c) in FIG. 6, peer protocol layers on the terminal side and the network side include a PHY layer, a MAC layer, an RLC layer, a PDCP layer, an RRC layer, and an EAC layer. A difference from (c) in FIG. 5 lies in that after receiving MEC function related information from the terminal side carried in EAC signaling, the network side sends the MEC function related information to the MEC management function through the H interface. Correspondingly, the MEC management function sends the MEC function related information to the network side through the H interface, and then the network side sends the MEC function related information to the terminal side through EAC signaling.

In the MEC architecture shown in FIG. 3, an MEC management function may be introduced on each of a network side and a terminal side, to provide an MEC application service to the network side or the terminal side. Based on the MEC network architecture, a computing task on the network side can be offloaded to the terminal side for execution, to reduce computing load on the network side. A computing task on the terminal side may also be offloaded to the network side for execution, to reduce computing load on the terminal side. In addition, computing resources of a network system may be flexibly scheduled based on actual computing load on the network side and the terminal side and a computing capability, thereby improving utilization of the computing resources of the system.

Based on the MEC architecture shown in FIG. 3, an embodiment of this application further provides a network edge computing method. The technical solutions provided in embodiments of this application may be used in a scenario in which a terminal is connected to one network device, may be used in a scenario in which a terminal is connected to a plurality of network devices, or may be used in another scenario, for example, a scenario in which a terminal is connected to another terminal. This is not specifically limited. For ease of understanding embodiments of this application, the following describes, with reference to a specific application scenario, how to offload a computing task on a network side or a terminal side based on the MEC architecture shown in FIG. 3. The computing task herein mainly refers to a computing task. Therefore, in the following description, an example in which the computing task is a computing task is used, and an example in which the MEC management function is a network element independent of the RAN-side device is used.

Application scenario 1: A terminal is connected to one network device, and a terminal side offloads a computing task to a network side.

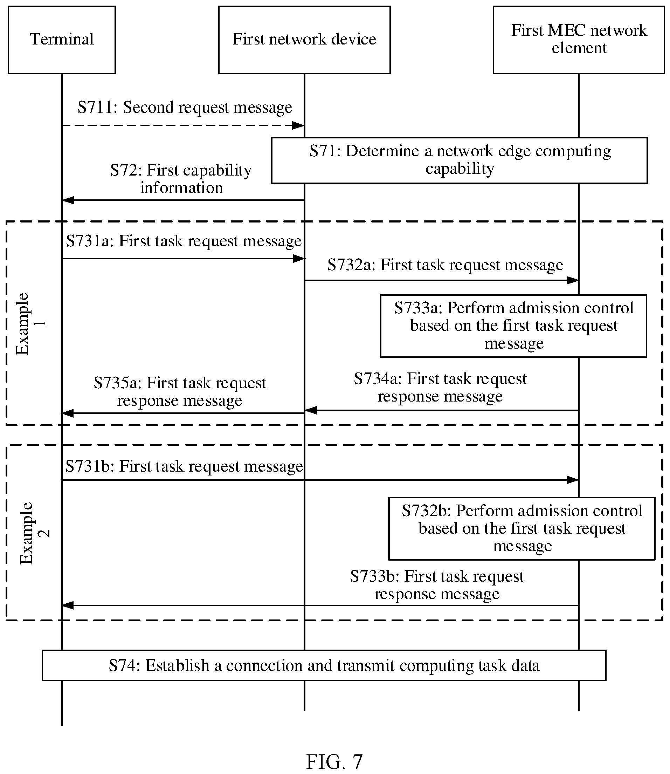

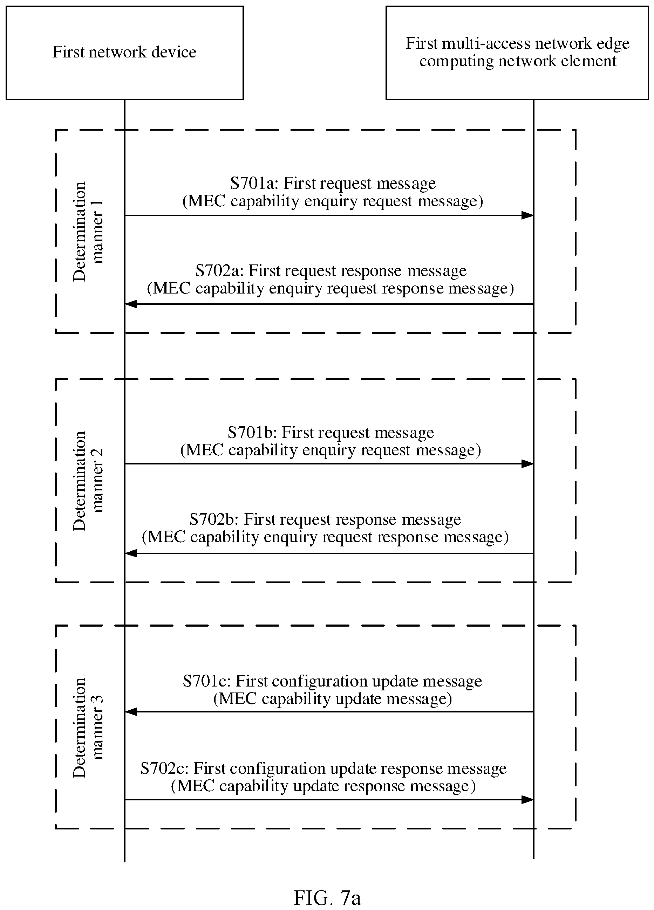

FIG. 7 is a flowchart of a first network edge computing method according to an embodiment of this application. The method is used in the foregoing application scenario 1. A specific process of the network edge computing method is described as follows:
S71: A first network device determines a computing capability of a first MEC network element, where the computing capability of the first MEC network element is for indicating an MEC computing service that can be provided by the first MEC network element.

The first MEC network element is an MEC network element deployed on a network side, and the first MEC network element includes an MEC management function and an MEC computing function. The MEC computing function can provide an MEC computing service, and the MEC management function may be configured to manage the MEC computing function. For example, the MEC management function may receive a computing task request from a terminal by using the first network device, and may indicate the MEC computing function to execute some or all computing tasks of the terminal.

MEC computing services that can be provided by different MEC computing functions may be the same or may be different. For example, different MEC computing functions have different hardware parameters, and therefore different MEC computing functions have different computing capabilities. In this case, different MEC computing functions can provide different MEC computing services. A same MEC computing function may even provide different MEC computing services in different time segments. For example, if computing load of a same MEC computing function is different in different time segments, computing capabilities of the MEC computing function may be different in different time segments, and MEC computing services that can be provided by the MEC computing function may also be different. In this specification, a computing capability of the MEC computing function may be represented by using computing capability parameters. The MEC computing function may be a hardware function, a software function, or a combination of a hardware function and a software function. For the MEC computing hardware function, the computing capability parameters may include computing load of the MEC computing function, a service type supported by the MEC computing function, a hardware parameter of the MEC computing function, and the like. For example, the hardware parameter may include one or more of the following parameters:
(1) Throughput: is the amount of information that can be processed by the MEC computing function within a time segment.
(2) Response time: is time elapsed since a valid input until the system responds.
(3) Utilization: is a percentage of time for which the system is actually used in a given time interval.
(4) Processor word length: is the number of bits of a binary number that can be operated in an arithmetic logic unit at a time.
(5) Bus width: is the number of binary bits of an internal bus that connects the arithmetic logic unit to a memory in a central processing unit (central processing unit, CPU).
(6) Memory bandwidth: is the amount of binary information read from the memory in a unit time, and is generally expressed in bytes/second.
(7) CPU frequency: is a fixed frequency with which a master clock generates a signal. The reciprocal of the frequency is a CPU clock cycle.
(8) CPU execution time = the number of CPU clock cycles × CPU time.
(9) Million instructions per second (million instructions per second, MIPS)
(10) Floating-point operations per second (floating-point operations per second, FLOPS)

For the MEC computing software function, the computing capability parameters may include computing load of the MEC computing function, a service type supported by the MEC computing function, a software parameter, and the like. For example, the software parameter may further include one or more of the following:
(1) Throughput: is the amount of information that can be processed by the MEC computing function within a time segment.
(2) Response time: is time elapsed since a valid input until the system responds.
(3) Maximum user access number: is the number of users who access the system in the same time segment.
(4) Maximum task processing number: is the number of tasks that can be processed in parallel by the system in the same time segment.
(5) Performance counters: are some data indicators for describing performance of a server or an operating system. For example, for a Windows system, memory in usage (memory in usage) and total process time (total process time) are common counters.
(6) Think time: is also referred to as sleep time. The time refers to an interval time between two requests when a user performs an operation from the perspective of services.
(7) TPS (Transaction per second): is the number of transactions that the system can process per second.
(8) Click-through rate: is the number of Hypertext Transfer Protocol (hypertext transfer protocol, HTTP) requests submitted by the user to the server per second.

It should be understood that the terminal may request the first network device to offload a computing task of the terminal to the MEC computing function. If the computing capability of the MEC computing function is insufficient to satisfy a computing requirement of the computing task of the terminal, but the first network device offloads the computing task of the terminal to the MEC computing function, apparently, the MEC computing function unsuccessfully executes the computing task.

Therefore, the first network device may determine a network edge computing capability. In this scenario, an example in which the network edge node is the first MEC network element is used. In other words, the first network device may determine the computing capability of the first MEC network element. In this way, the first network device clearly learns a computing capability of the MEC computing function, to properly allocate a computing task of the terminal, to ensure a success rate of executing the computing task by the MEC computing function. The first network device may actively obtain the computing capability of the first MEC network element, or the first MEC network element may actively notify the first network device of the computing capability of the first MEC network element. The following lists several manners in which the first network device determines the computing capability of the first MEC network element.

For a determination manner 1, refer to FIG. 7a being a schematic flowchart of determining a computing capability of a first MEC network element by a first network device.

S701a: The first network device sends a first request message to the first MEC network element, where the first request message is for requesting or indicating to enquire the computing capability of the first MEC network element.

When needing to obtain the computing capability of the first MEC network element, the first network device may send the first request message to the first MEC network element, to request to obtain the computing capability of the first MEC network element. A name of the first request message is not limited in this embodiment of this application. For example, the first request message may also be referred to as an MEC capability enquiry (MEC capability enquiry) request message.

S702a: The first MEC network element sends a first request response message to the first network device, where the first request response message includes first capability information, and the first capability information is for indicating the computing capability of the first MEC network element.

After receiving the first request message, the first MEC network element may send the first request response message to the first network device in response to the first request message. In other words, the first MEC network element sends the response message in response to the first request message to the first network device. The first request response message carries the first capability information, and the first capability information may be for indicating the computing capability of the first MEC network element. For example, the first capability information may include one or more of the foregoing computing capability parameters. The first network device obtains the first capability information, and may determine the computing capability of the first MEC network element based on the first capability information.

It should be noted that a name of the first request response message is not limited in this embodiment of this application. For example, the first request response message may also be referred to as an MEC capability acknowledgment (MEC capability ACK) message.

For a determination manner 2, still refer to FIG. 7a showing another process of determining a computing capability of a first MEC network element by a first network device.

S701b: The first MEC network element sends an H interface establishment request message to the first network device, where the H interface establishment request message is for requesting to establish an H interface connection to the first MEC network element.

S702b: The first network device sends an H interface setup request response message to the first MEC network element, where the H interface setup request response message includes first capability information, and the first capability information is for indicating the computing capability of the first MEC network element.

After receiving the H interface establishment request message of the first network device, the first MEC network element may add the first capability information to the H interface establishment request response message, and send the H interface establishment request response message to the first network device. In this determination manner, as long as the first network device requests to establish a connection to the first MEC network element, the first MEC network element notifies the first network device of the computing capability of the first MEC network element. In this way, no additional signaling needs to be exchanged for the MEC capability, to reduce signaling overheads as much as possible.

The first network device may actively obtain the computing capability of the first MEC network element in the determination manner 1 and the determination manner 2. In an alternative manner, that is, a third determination manner, the first MEC network element may actively notify the first network device of the computing capability of the first MEC network element.

For a determination manner 3, still refer to FIG. 7a showing still another process of determining a computing capability of a first MEC network element by a first network device.

S701c: The first MEC network element sends a first configuration update message to the first network device, where the first configuration update message includes first capability information, and the first capability information is for indicating the computing capability of the first MEC network element.

The first MEC network element may periodically notify the first network device of the computing capability of the first MEC network element. For example, the first MEC network element may periodically send the first configuration update message to the first network device, where the first configuration update message may carry the first capability information, and the first capability information may include one or more of the foregoing computing capability parameters. Alternatively, after the computing capability of the first MEC network element changes, the first MEC network element may notify the first network device of a changed computing capability. For example, after the computing capability of the first MEC network element changes, the first MEC network element sends the first configuration update message to the first network device, where the first configuration update message may carry the first capability information, and the first capability information may include one or more of the foregoing computing capability parameters. The first network device obtains the first capability information, and may determine the computing capability of the first MEC network element based on the first capability information. The first MEC network element actively notifies the first network device of the updated computing capability of the first MEC network element. Therefore, the first network device can be prevented from sending an unnecessary first request message, to reduce signaling overheads as much as possible.

It should be noted that a name of the first configuration update message is not limited in this embodiment of this application. The first configuration update message is for notifying the computing capability of the MEC. Therefore, the first configuration update message may also be referred to as an MEC capability update message.

S702c: The first network device sends a first configuration update response message to the first MEC network element.

After determining the computing capability of the first MEC network element based on the first configuration update message, the first network device may feed back an acknowledgment message to the first MEC network element, to notify, to the first MEC network element, whether the first network device determines the computing capability of the first MEC network element. For example, the first network device may send the first configuration update response message to the first MEC network element, where the first configuration update response message is a response message in response to the first configuration update message. If the first configuration update response message indicates that the first network device does not determine the computing capability of the first MEC network element, for example, the first configuration update message does not include computing capability information although the first MEC network element sends the first configuration update message to the first network device, or time validity of computing capability information of the first MEC network element stored in the first network device expires, the first MEC network element may send the first configuration update response message to the first network device again, to ensure that the first network device determines the computing capability of the first MEC network element as much as possible.

It should be noted that the first request message in the determination manner 1 may be a dedicated message, for example, a newly defined EAC message. Alternatively, an existing message may be reused as the first request message. For example, the first request message is an RRC message. Similarly, an existing message may also be reused as the first configuration update message in the determination manner. For example, the first configuration update message is an RRC message. Alternatively, the first configuration update message may be a dedicated message, for example, a newly defined EAC message.

It should be understood that, if the terminal does not need to offload the computing task, the first network device may not need to obtain the computing capability of the first MEC network element.

In some embodiments, the first network device may obtain the computing capability of the first MEC network element based on a requirement of the terminal, to reduce signaling overheads as much as possible. In other words, S701a may be performed after S711.

S711: The terminal sends a second request message to the first network device, where the second request message is for indicating the first network device to obtain a network edge computing capability.

The terminal may send the second request message to the first network device, where the second request message may be for indicating the first network device to obtain the network edge computing capability. Alternatively, the second request message may be for requesting to obtain the computing capability of the network edge.

When the terminal has a requirement for offloading a computing task, the terminal sends the second request message to the first network device. The first network device receives the second request message, and sends the first request message to the first MEC network element, to avoid sending an unnecessary message to the first MEC network element, thereby reducing signaling overheads. It should be noted that a term of the second request message is not limited in this embodiment of this application. For example, the second request message may be referred to as a network edge capability enquiry (NW edge capability enquiry) request message. The second request message may be a newly defined message, for example, an EAC message. In another example, an existing message may be reused as the second request message. For example, the second request message may be a message 1 (Msg1) or a message 3 (Msg3), or a manner of obtaining the network edge computing capability by the terminal may be sent to the first network device in a form of an on-demand system message (On demand SI).

It should be noted that S711 is not a mandatory step, and therefore is shown by using a dashed line in FIG. 7. If S711 is a step that needs to be performed, a sequence of performing S711 and S71 is not limited in this embodiment of this application. For example, S71 may be performed before S711, or may be performed after S711.

The first network device determines a computing capability on the network side, and may notify the terminal of the computing capability on the network side. In this way, the terminal may properly request the network side to execute some computing tasks of the terminal with reference to the computing capability on the network side.

S72: The first network device sends first capability information, where the first capability information is for indicating the computing capability of the first MEC network element.

It should be understood that, if the terminal performs S711, after obtaining the computing capability of the first MEC network element, the first network device may send the first capability information to the terminal. If S711 is not performed, after obtaining the computing capability of the first MEC network element, the first network device may broadcast the first capability information. In this way, any terminal in the network may learn the computing capability of the first MEC network element, and therefore request the network side to execute a computing task of the terminal as required.

In some embodiments, the first network device may add the first capability information to a newly defined EAC message (for example, referred to as a network edge capability message) and send the newly defined EAC message to the terminal.

It should be noted that in addition to determining, based on the first capability information, a computing task to be offloaded, the terminal may further select a camped-on cell based on the first capability information. For example, the terminal preferentially selects a camped-on cell that supports an MEC computing service required by the terminal. In this way, when the terminal needs to process an MEC computing service, the terminal does not need to reselect the cell that can support the computing service of the terminal, to reduce an access delay. Certainly, if the terminal determines that an MEC computing service supported by a cell on which the terminal currently camps does not satisfy an MEC computing service requirement of the terminal, while an MEC computing service supported by a neighboring cell can satisfy the MEC computing service requirement of the terminal, and the neighboring cell satisfies a cell reselection condition, the terminal may reselect the neighboring cell. Alternatively, when reselecting a cell, the terminal may search a cell list that satisfies a reselection condition for a cell to be reselected that can satisfy an MEC computing service requirement.

After determining the network edge computing capability, the terminal may request the network side to execute a computing task of the terminal, to reduce computing load of the terminal. In a possible implementation, the terminal may request the network side from the first network device to execute a computing task of the terminal; or the terminal may request the first MEC network element to execute a computing task of the terminal. The following separately describes two possible implementations in which the terminal requests the network side to execute a computing task of the terminal.

In a possible implementation, in Example 1, the terminal requests the network side from the first network device to execute a computing task of the terminal. For a specific process, refer to the following S731a to S735a. It should be understood that signaling interaction in S73 1a to S735a may be based on a protocol layer architecture shown in (a) in FIG. 6.

S731a: The terminal sends a first task request message to the first network device, where the first task request message is for requesting a network side to execute at least one computing task of the terminal.

When the terminal needs the network side to execute at least one computing task of the terminal, the terminal may send the first task request message to the first network device. A term of the first task request message is not limited in this embodiment of this application. For example, the first task request message may be referred to as a computing task request (MEC Task Req) message. The first task request message is for requesting the network side to execute at least one computing task of the terminal. In this case, the first task request message may include a related parameter of the at least one computing task, so that the first network device properly allocates the at least one computing task to the MEC computing function based on the related parameter. For example, the first task request message may include one or more pieces of information such as MEC computing service type information, resource requirement information, task continuity assurance requirement information, and task key performance indicator (key performance indicator, KPI) requirement information. It should be understood that the MEC computing service type information may be for indicating an MEC computing service type, that is, a computing task type, for example, an artificial intelligence type or a microservice type. It should be understood that one computing service may include a plurality of microservices. The resource requirement information is for indicating a resource required for computing the at least one computing task, for example, a storage resource or a graphics processing unit (graphics processing unit, GPU) resource. The task continuity assurance requirement information may be for indicating a task continuity assurance requirement, that is, whether, if a task is interrupted, a subsequent process needs to be continued from a position where the task is interrupted or the task needs to be processed again. The task KPI requirement information may be for indicating a performance indicator requirement of the task, such as a delay requirement or a precision requirement.

S732a: The first network device sends the first task request message to the first MEC network element, and the first MEC network element receives the first task request message.

The first network device may forward the first task request message to the first MEC network element, to request the first MEC network element to execute the at least one computing task of the terminal.

S733a: The first MEC network element performs admission control based on the first task request message.

After receiving the first task request message, the first MEC network element may perform admission control on the request of the terminal based on an MEC computing service type supported by the first MEC network element, computing load, and the like.

S734a: The first MEC network element sends a first task request response message to the first network device, where the first task request response message is for notifying admission information of the at least one computing task.

If the first MEC network element determines that the at least one computing task can be executed, the first MEC network element may notify the first network device that the first MEC network element determines to execute the at least one computing task. For example, the first MEC network element may send the first task request response message to the first network device. It should be understood that the first task request response message is a response message in response to the first task request message. If the first MEC network element supports execution of the at least one computing task, the first task request response message may include the admission information of the at least one computing task.

If the first MEC network element does not support execution of the at least one computing task, the first task request response message may be for indicating that the first MEC network element does not support execution of the at least one computing task, to notify the first network device that the first MEC network element does not support execution of the at least one computing task, to prevent the first network device from sending data of the at least one computing task to the first MEC network element to introduce unnecessary overheads.

S735a: The first network device sends the first task request response message to the terminal.

After receiving the first task request response message, the first network device may forward the first task request message to the terminal, that is, send the admission information of the at least one computing task to the terminal.

In another possible implementation, in Example 2, the terminal requests the first MEC network element to execute the computing task of the terminal. For a specific process, refer to the following S731b to S733b. It should be understood that signaling interaction in S731a to S734a may be based on a protocol layer architecture shown in (b) in FIG. 6 or a protocol layer architecture shown in (c) in FIG. 6.

S731b: The terminal sends a first task request message to the first MEC network element, where the first task request message is for requesting a network side to execute at least one computing task of the terminal.

S732b: The first MEC network element performs admission control based on the first task request message.

S733b: The first MEC network element sends a first task request response message to the first network device.

S731b is similar to S731a, and a difference lies in that S731b is implemented based on the protocol layer architecture shown in (b) in FIG. 6 or the protocol layer architecture shown in (c) in FIG. 6, and S731a is implemented based on the protocol layer architecture shown in (a) in FIG. 6. In other words, the first task request message in S731b may be a newly defined EAC message, and the first task request message in S73 1a may be an RRC message. It should be understood that in S731b, after receiving the first task request message, the first network device forwards the message to the first MEC network element. The first network device does not parse content of the first task request message, but the first MEC network element parses and processes the first request message. Specifically, for implementation of S731b, refer to the description in S731a. Details are not described herein again.

Similarly, implementation of S732b is similar to that of S733a. For the implementation, refer to the description in S733a. Details are not described herein again. Implementation of S733b is similar to that of S734a. For the implementation, refer to the description in S734a. Details are not described herein again.

In this implementation, the terminal may establish control plane and data plane transmission channels with the first MEC network element, so that the terminal can directly exchange computing task data with the first MEC network element without forwarding the computing task data by the first network device, thereby reducing an interaction delay.

S74: The terminal establishes a connection to the first MEC network element, and transmits computing task data.

After the terminal receives the first task request response message from the first MEC network element, the terminal may request to establish a connection to the first MEC network element. After the connection is established, the terminal and the first MEC network element may transmit related data of a computing task (referred to as computing task data below) to each other.

For example, the terminal and the first MEC network element may establish a control plane transmission channel, that is, the terminal may exchange computing task data with the first MEC network element through the control plane transmission channel. For example, the computing task data is carried on an SRB; the computing task data is carried on a radio bearer RB newly defined for an MEC service, for example, an MEC-RB; or the computing task data may be carried on application layer control information of an MEC interface, where the application layer control information may be, for example, referred to as an HAP message. The terminal and the first MEC network element may establish a data plane transmission channel, that is, the terminal may exchange computing task data with the first MEC network element through the data plane transmission channel. For example, the computing task data is carried on a DRB, a newly defined radio bearer such as an MEC-RB, or an H interface data channel from the first network device to the first MEC network element.

The application scenario 1 supports Example 1 and Example 2. To be specific, the terminal may interact with the first MEC network element to perform related signaling in Example 1 or Example 2, which is more flexible.

Application scenario 2: A terminal is connected to a plurality of network devices, and a network side includes a plurality of MEC network elements. A terminal side may offload a computing task to the one or more MEC network elements on the network side.

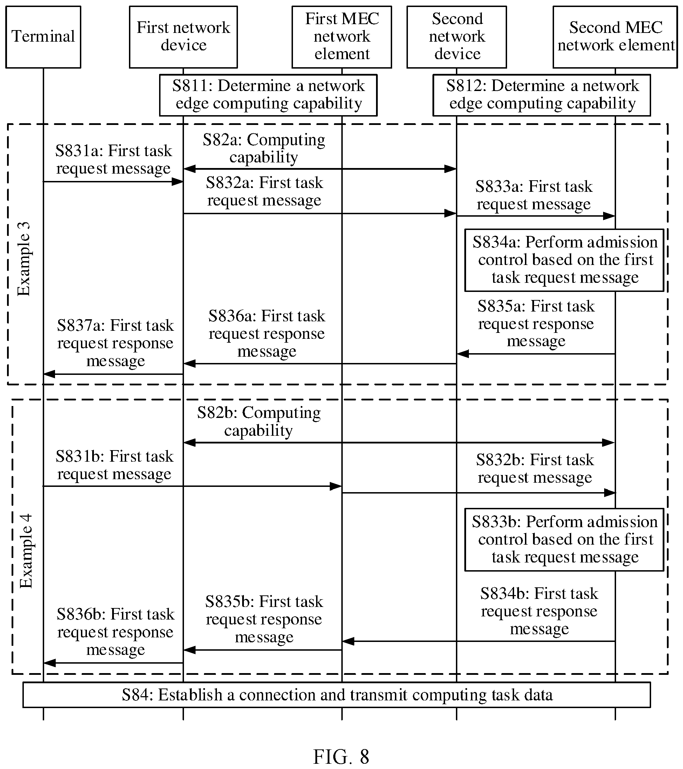

FIG. 8 is a flowchart of a second network edge computing method according to an embodiment of this application. The method is used in the foregoing application scenario 2. In FIG. 8, a terminal is connected to two network devices, and the two network devices are each connected to an MEC network element. In other words, in FIG. 8, an example in which two MEC network elements (a first MEC network element and a second MEC network element) are included is used. In this case, the terminal may offload the computing task to the first MEC network element on the network side, or may offload the computing task to the second MEC network element. A specific process of the network edge computing method is described as follows:

S811: A first network device determines a computing capability of a first MEC network element, where the computing capability of the first MEC network element is for indicating an MEC computing service that can be provided by the first MEC network element.

S812: A second network device determines a computing capability of a second MEC network element, where the computing capability of the second MEC network element is for indicating an MEC computing service that can be provided by the second MEC network element.

Implementation of S811 and implementation of S812 are the same as implementation of S71. For details, refer to related descriptions of S71. Details are not described herein again. In addition, a sequence of performing S811 and S812 is not limited in this embodiment of this application. In other words, S811 may be performed before S812, or S811 may be performed after S812.

S82a: The first network device and the second network device exchange the computing capabilities of the MEC network elements respectively connected to the first network device and the second network device.

It should be understood that, if the terminal requests the first MEC network element to execute a computing task, but the computing capability of the first MEC network element is insufficient to satisfy a computing requirement of the computing task, for example, computing load of the first MEC network element is heavy, the first network device indicates the first MEC network element to execute the computing task, causing a failure of the computing task. Therefore, the first network device determines that the first MEC network element cannot execute the computing task, and may determine, from the network, another MEC network element that can execute the computing task, for example, the second MEC network element.

For example, the first network device may determine the computing capability of the second MEC network element from another network device, for example, the second network device. For example, the first network device may send, to the second network device, a message for requesting to obtain the computing capability of the second MEC network element. After receiving the message, the second network device replies to the first network device with the computing capability of the second MEC network element. Similarly, the second network device may also obtain the computing capability of the first MEC network element. To be specific, every two of the plurality of network devices in the network may learn computing capabilities of respective MEC network elements. In this way, when a network device determines that a computing task requirement of the terminal is not satisfied, the network device may request another network device to execute the computing task, to ensure that the computing task of the terminal is normally executed as much as possible.

It should be understood that in S82a, the first network device determines a computing capability of the MEC on the second network device side by interacting with the second network device. In other words, the plurality of network devices may directly exchange respective computing capabilities, to determine the respective computing capabilities. In an alternative implementation, the first MEC network element located on the first network device side may exchange respective computing capabilities with the second MEC network element located on the second network device side. In this way, the first network device may indirectly obtain the computing capability of the second MEC network element from the first MEC network element, and the second network device may also obtain the computing capability of the first MEC network element from the second MEC network element.

S82b: The first MEC network element and the second MEC network element exchange respective computing capabilities.

Similar to S82a, when the first MEC network element needs to obtain the computing capability of the second MEC network element, the first MEC network element may send, to the second MEC network element, a message for requesting to obtain the computing capability of the second MEC network element. After receiving the message, the second MEC network element sends a request response message to the first MEC network element. The request response message includes related information of the computing capability of the second MEC network element. Similarly, the second MEC network element may also obtain the computing capability of the first MEC network element. To be specific, every two of the plurality of MEC network elements in the network may learn respective computing capabilities. In this case, the first network device may request to obtain the computing capability of the second MEC network element from the first MEC network element. The second network device may request to obtain the computing capability of the first MEC network element from the second MEC network element.

It should be understood that, because the first MEC network element and the second MEC network element are independent logical entities, the first MEC network element may exchange a message or information with the first network device through an H interface. Similarly, the second MEC network element may exchange a message or information with the second network device through the H interface. The first MEC network element may exchange a message or information with the second MEC network element through an X interface. If the first MEC network element and the second MEC network element are of an embedded structure, that is, the first MEC network element is disposed inside the first network device and the second MEC network element is disposed inside the second network device, the first MEC network element and the second MEC network element may exchange messages or information through an Xn interface.

It should be noted that a sequence of performing S82a and S82b is not limited. In other words, S82a may be performed before S82b, or may be performed after S82b. In addition, S82a and S82b do not need to be both performed. In a possible implementation, in Example 3, the terminal requests, from the second network device via the first network device, the network side to execute the computing task of the terminal. In this embodiment of this application, if S82a is performed, S831a to S837a may be subsequently performed. In another possible implementation, in Example 4, the terminal requests, from the second MEC network element via the first MEC network element, the network side to execute the computing task of the terminal. In this embodiment of this application, if S82b is performed, S831b to S835b may be subsequently performed.

S831a: The terminal sends the first task request message to the first network device, and the first network device receives the first task request message.

Specifically, implementation of S831a is the same as that of S73a. For the implementation, refer to related descriptions of S73a. Details are not described herein again.

The first network device receives the first task request message. If the computing capability of the first MEC network element satisfies a computing requirement of the computing task of the terminal, for example, the first MEC network element is computationally overloaded, the first network device may send the first task request message to the first MEC network element, that is, perform S732a. A difference from the process shown in FIG. 7 lies in that if the computing capability of the first MEC network element does not satisfy the computing requirement of the computing task of the terminal, the first network device may request another MEC network element to execute the computing task of the terminal. In other words, the first network device may perform S832a.

S832a: The first network device sends the first task request message to the second network device, and the second network device receives the first task request message.

Because the first network device and another network device may exchange respective computing capabilities, when determining that the computing capability of the first MEC network element does not satisfy the computing requirement of the computing task of the terminal, the first network device may determine, from the another network device, an MEC network element that can satisfy the computing requirement of the computing task of the terminal, for example, the second MEC network element. Alternatively, it may be understood that the first network device may determine a target network device from other network devices, for example, the second network device. It should be understood that an MEC network element connected to the target network device can satisfy the computing requirement of the computing task of the terminal. In this case, the first network device may forward the first task request message from the terminal to the second network device.

In an alternative implementation, the first network device may send the first task request message to a network device in other network devices, such as a third network device. If a third MEC network element connected to the third network device can satisfy the computing requirement of the computing task of the terminal, the third network device requests the third MEC network element to execute the computing task of the terminal. If the third MEC network element does not satisfy the computing requirement of the computing task of the terminal, the third network device may re-determine a target network device from other network devices, and send the first task request message to the target network device. Alternatively, the third network device re-forwards the first task request message to another network device in the other network devices.

S833a: The second network device sends the first task request message to the second MEC network element, and the second MEC network element receives the first task request message.

Specifically, implementation of S833a is the same as that of S732a. For the implementation, refer to related descriptions of S732a. Details are not described herein again.

S834a: The second MEC network element performs admission control based on the first task request message.

Specifically, implementation of S834a is the same as that of S733a. For the implementation, refer to related descriptions of S733a. Details are not described herein again.

S835a: The second MEC network element sends a first task request response message to the second network device, and the second network device receives the first task request response message.

Specifically, implementation of S834a is the same as that of S733a. For the implementation, refer to related descriptions of S733a. Details are not described herein again.

S836a: The second network device sends the first task request response message to the first network device, and the first network device receives the first task request response message.

The second network device sends the first task request response message through an interface between the second network device and the first network device, that is, the first task request response message may be an interface message between the second network device and the first network device.

S837a: The first network device sends the first task request response message to the terminal.

Specifically, implementation of S837a is the same as that of S735a. For the implementation, refer to related descriptions of S735a. Details are not described herein again. A difference from S735a lies in that, in addition to the admission information of the computing task of the terminal, the first task request response message may further include related configuration information of the second network device. The related configuration information may include air interface configuration information of the second network device, for example, random access channel (random access channel, RACH) information, so that the terminal may access the second network device in a manner such as handover or direct connection.

The foregoing steps in Example 3 are performed, that is, the first network device and the second network device exchange respective computing capabilities. In this way, the first network device may determine another MEC network element that can execute the computing task of the terminal, to request the second network device side to execute the computing task of the terminal, to provide a nearby computing service to the terminal side as much as possible, thereby improving user experience.

S831b: The terminal sends the first task request message to the first MEC network element, and the first MEC network element receives the first task request message.

S832b: The first MEC network element sends the first task request message to the second MEC network element, and the second MEC network element receives the first task request message.

S833b: The second MEC network element performs admission control based on the first task request message.

S834b: The second MEC network element sends a first task request response message to the first MEC network element, and the first MEC network element receives the first task request response message.

S835b: The first MEC network element sends the first task request response message to the first network device, and the first network device receives the first task request response message.

S836b: The first network device sends the first task request response message to the terminal, and the terminal receives the first task request response message.

Specifically, implementation of S831b is the same as that of S731b. For the implementation, refer to related descriptions of S731b. Implementation of S833b is the same as that of S732b. For the implementation, refer to related descriptions of S732b. Implementation of S835b is the same as that of S733b. For the implementation, refer to related descriptions of S733b. Implementation of S836b is the same as that of S837a. For the implementation, refer to related descriptions of S837a. Details are not described herein again. In S832b and S834b, the first MEC network element and the second MEC network element may exchange the first task request message or the first task request response message through the X interface between the first MEC network element and the second MEC network element. Alternatively, the first MEC network element and the second MEC network element may exchange the first task request message or the first task request response message through the Xn interface between the first network device and the second network device.

It should be noted that the first task request response message in S834b may carry the related configuration information of the second network device, and the first task request response message in S835b may carry related configuration information of the first network device and the related configuration information of the second network device.

The steps in this embodiment of this application are performed, that is, the first MEC network element and the second MEC network element exchange respective computing capabilities. In this way, the terminal can directly request the first MEC network element to execute the computing task without using any network device, thereby reducing signaling overheads.

S84: The terminal establishes a connection to the second MEC network element, and transmits computing task data.

By performing the foregoing steps in this embodiment, the terminal sends the computing task data to the first MEC network element, and then the first MEC network element sends the computing task data to the second MEC network element through the X interface between the first MEC network element and the second MEC network element, without using the first network device and the second network device to forward the computing task data. In this way, signaling overheads and a delay caused by handover or dual connectivity can be reduced.

The foregoing describes a process in which a network side executes a computing task on a terminal side based on the MEC architecture shown in FIG. 3. With improvement in computing capabilities of terminals, some terminals have an MEC computing function and can also provide a computing service. For ease of description, in this embodiment of this application, terminals may be classified into two types based on whether the terminals can provide a computing service, for example, a first-type terminal and a second-type terminal. The first-type terminal refers to a terminal (which may be denoted as C-UE) that cannot provide a computing service. Relatively, the second-type terminal refers to a terminal (which may be denoted as H-UE) that can provide a computing service. The first-type terminal may be considered as a terminal (consumer UE, which may be denoted as C-UE) that needs to obtain a computing service, and the second-type terminal may be considered as a terminal (helper UE, which may be denoted as H-UE) configured to provide a computing service. In this case, the first-type terminal may request the second-type terminal to execute a computing service of the first-type terminal. The following describes, with reference to accompanying drawings, a specific process in which the second-type terminal executes a computing service of the first-type terminal.

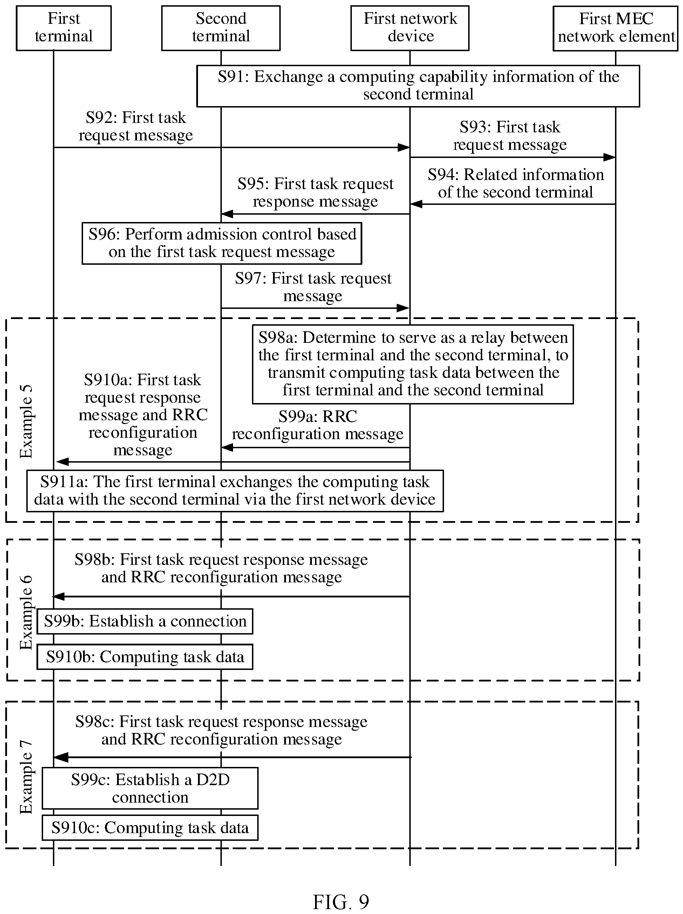

FIG. 9 is a flowchart of a third network edge computing method according to an embodiment of this application. A specific process of the network edge computing method is described as follows:
S91: A second terminal exchanges computing capability information of the second terminal with a first MEC network element.

It should be understood that the second terminal belongs to a second-type terminal type, that is, the second terminal may be any H-UE in a network. Although the second terminal can provide a computing service, a first terminal does not learn existence of the second terminal. It should be understood that the first terminal belongs to a first-type terminal type. If the first terminal directly requests another terminal to execute a computing task of the first terminal, a failure is caused. Therefore, in this embodiment of this application, the second terminal registers the computing capability information of the second terminal with the first MEC network element, and the first MEC network element may manage the second terminal.

In an implementation, the second terminal may send a first registration request message to the first MEC network element, where the first registration request message may be for requesting to register the computing capability of the second terminal. The first registration request message may carry registration information of the second terminal, for example, identification information of the second terminal and the computing capability information of the second terminal, for example, including one or more of the foregoing computing capability parameters. After receiving the first registration request message, the first MEC network element may store the registration information of the second terminal, and feed back a response message (which may be referred to as a first registration request response message) in response to the first registration request message to the second terminal.

Certainly, the computing capability of the second terminal may change. When the computing capability of the second terminal changes, the second terminal may notify the first MEC network element of a changed computing capability, to ensure that the first MEC network element stores the latest computing capability of the second terminal. For example, when the computing capability of the second terminal changes, the second terminal may send computing capability update information to the first MEC network element, where the computing capability update information may carry one or more of the foregoing computing capability parameters. For example, if the computing load of the second terminal changes, the computing capability update information may carry updated computing load. It should be understood that the first MEC network element may store computing capabilities of a plurality of second terminals. The first MEC network element learns a second terminal having a computing capability. When receiving a computing task request of the first terminal, the first MEC network element may determine that the first MEC network element executes the computing task of the first terminal, or may request the second terminal to execute the computing task of the first terminal.

S92: A first terminal sends a first task request message to a first network device, and the first network device receives the first task request message.

It should be understood that the first terminal belongs to the first-type terminal type, that is, the first terminal may be any C-UE in the network.

S93: The first network device forwards the first task request message to the first MEC network element.

Specific implementation of S92 is the same as that of S73a, and specific implementation of S93 is the same as that of S732a. For details, refer to related descriptions of S73a and S732a. Details are not described herein again.

S94: The first MEC network element sends related information of a target terminal to the first network device, and the first network device receives the related information.

After receiving the first task request message, the first MEC network element may determine, from a plurality of second-type terminals based on a computing requirement of at least one computing task in the first task request message, a target terminal that satisfies the computing requirement. Then, the first MEC network element sends related information of the target terminal, for example, identification information of the target terminal to the first network device, to notify the first network device that the target terminal can execute the computing task of the first terminal. The first network device may request the target terminal to execute the computing task of the first terminal. For ease of description, the second-type terminal is used as an example below.

It should be understood that signaling interaction in S93 may be based on a protocol layer architecture shown in (b) in FIG. 6 or a protocol layer architecture shown in (c) in FIG. 6. For example, related information of a target second-type terminal may be carried in an H interface request message, or may be carried in a newly defined EAC message.

S95: The first network device forwards the first task request message to the second terminal.

It should be understood that, in this step, the second terminal is one H-UE in the plurality of second-type terminals, and the H-UE is the target terminal learned by the first network device in step S94. In subsequent steps of this embodiment, the second terminal is correspondingly the target terminal.

S96: The second terminal performs admission control based on the first task request message.

Specific implementation of S96 is the same as that of S733a. For details, refer to related descriptions of S733a. Details are not described herein again.

S97: The second terminal sends a first task request response message to the first network device, and the first network device receives the first task request response message.

If the second terminal determines that at least one computing task can be executed, the second terminal may notify the first network device that the second terminal determines to execute the at least one computing task. For example, the second terminal may send the first task request response message to the first network device. It should be understood that the first task request response message is a response message in response to the first task request message. If the second terminal supports execution of the at least one computing task, the first task request response message may include the admission information of the at least one computing task.

It can be learned that the second terminal supports execution of at least one computing task, so that the network can offload some computing tasks to the second-type terminal for execution, thereby saving resources on a network side and fully utilizing resources on a terminal side.

The following separately describes three possible implementations in which the first terminal and the second terminal are connected in different manners.

In a possible implementation, in Example 5, the first network device serves as a relay to implement communication between the first terminal and the second terminal. For a specific process, refer to the following S98a to S911a.

S98a: The first network device determines to serve as a relay between the first terminal and the second terminal, to transmit computing task data between the first terminal and the second terminal.

S99a: The first network device sends an RRC reconfiguration message to the second terminal, where the RRC reconfiguration message includes bearer information for the computing task data, for example, DRB-related configuration information, so that the first network device and the second terminal can exchange the computing task data with each other.

S910a: The first network device sends the first task request response message and the RRC reconfiguration message to the first terminal, so that the first network device and the first terminal can exchange the computing task data with each other.

S911a: The first terminal exchanges the computing task data with the second terminal via the first network device.

By performing the foregoing steps in Example 5, the first network device serves as a relay between the first terminal and the second terminal, to forward the computing task data from the first terminal to the second terminal and also forward the computing task data from the second terminal to the first terminal. In this way, the first terminal transmits the computing task data to the second terminal by using a relay function on the network side.

It should be noted that the process shown in FIG. 9 is also applicable to a scenario of relaying of a plurality of network devices, that is, the first terminal transmits a message or information to the second terminal through relaying of the plurality of network devices. A difference between relaying of a plurality of network devices and relaying of one network device lies in that an Xn channel needs to be established between a plurality of network devices for an MEC service to forward data.

In addition, a specific implementation form of the second terminal is not limited in this embodiment of this application. The process shown in FIG. 9 also changes based on different second terminals.

In another possible implementation, in Example 6, the second terminal may be an integrated access backhaul (integrated access backhaul, IAB) device. For a specific process, refer to the following S98b to S910b. In other words, if the second terminal is an IAB device, the network edge computing method shown in FIG. 9 includes S91 to S97 and S98b to S910b.

S98b: The first network device sends the first task request response message and an RRC reconfiguration message to the first terminal.

A difference from S910a lies in that the first task request response message includes related information of the second terminal. Because the second terminal is an IAB device, the first terminal and the second terminal may not need to communicate with each other via the first network device. The first terminal may establish a connection to the second terminal based on the related information of the second terminal, to implement direct exchange of computing task data.

S99b: The first terminal establishes a connection to the second terminal.

S910b: The first terminal exchanges computing task data with the second terminal.

An MEC computing function is set on the IAB device. By performing S98b to S910b, the first terminal may randomly access the second terminal, so that the computing task data can be transmitted to the second terminal. It should be understood that the second terminal, namely, the IAB device needs to be configured with a CU-UP protocol layer, for example, a PDCP layer or an SDAP layer. The computing task data is transmitted to a DU of the IAB device, for example, transmitted to a PHY layer, a MAC layer, or an RLC layer of the DU, and then transmitted to an application layer of the IAB device through the CU-UP protocol layer and processed.

By performing the foregoing steps in Example 6, the second device may be an IAB device. In this way, the first device may randomly access the second terminal, to connect to the second terminal and then exchange computing task data. There is no need to use another device, for example, a network device. In this way, signaling overheads of executing a computing task of the first terminal by the second terminal can be reduced.

In still another possible implementation, in Example 7, the second terminal and the first terminal have a D2D function, that is, the second terminal and the first terminal may exchange computing task data in a D2D manner. In this case, for a specific process, refer to the following S98c to S910c. In other words, if the second terminal and the first terminal may exchange computing task data in the D2D manner, the network edge computing method shown in FIG. 9 includes S91 to S97 and S98c to S910c.

S98c: The first network device sends the first task request response message and an RRC reconfiguration message to the first terminal.

A difference from S910a lies in that the first task request response message includes related information of the second terminal. Because the second terminal is a device having the D2D function, the first terminal and the second terminal may not need to communicate with each other via the first network device. The first terminal may establish a D2D connection to the second terminal based on the related information of the second terminal, to implement direct exchange of computing task data.

S99c: The first terminal establishes a D2D connection to the second terminal.

A difference from S99b lies in that the first terminal establishes the D2D connection to the second terminal.

S910c: The first terminal exchanges computing task data with the second terminal.

After the first terminal establishes the D2D connection to the second terminal, the first terminal may send the computing task data to the second terminal through a D2D channel.

By performing the foregoing steps in Example 7, the first terminal and the second terminal may directly establish the D2D connection and then exchange the computing task data. There is no need to use another device, for example, a network device. In this way, signaling overheads of executing a computing task of the first terminal by the second terminal can be reduced.

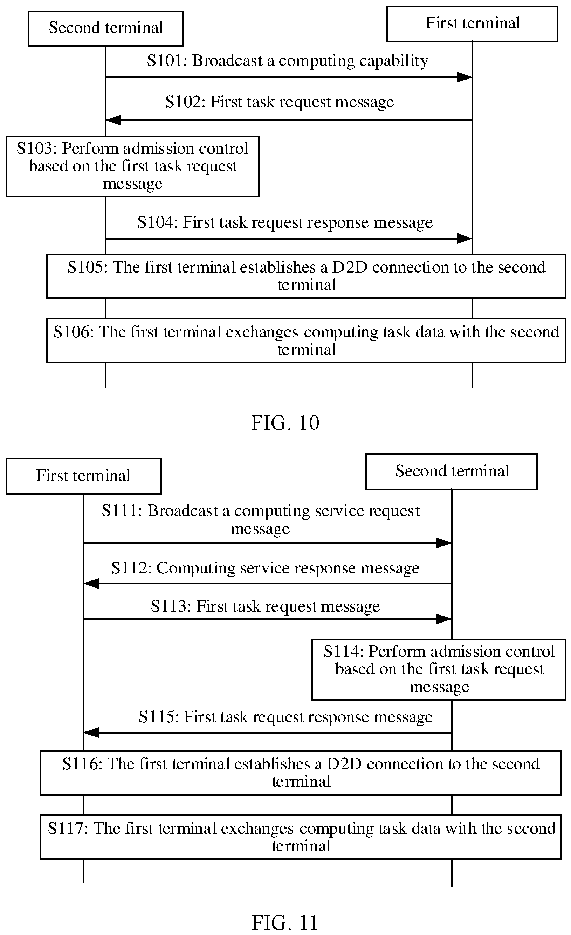

FIG. 9 shows a process in which the first terminal offloads at least one computing task to the second terminal via the first network device. In other words, the first terminal does not learn the second terminal, and the first terminal notifies, via the first network device, the second terminal that can provide a computing service, to request the second terminal to execute the computing task of the first terminal. It should be understood that, if the first terminal learns the second terminal that can provide the computing service, the first terminal may directly request the second terminal to execute the computing task of the first terminal, as shown in a process in FIG. 10.

FIG. 10 is a flowchart of a fourth network edge computing method according to an embodiment of this application. A specific process of the network edge computing method is described as follows:

S101: A second terminal broadcasts a computing capability of the second terminal.

In this embodiment of this application, the second terminal may broadcast computing capability information for indicating the computing capability of the second terminal. In this way, after receiving the computing capability information, a first terminal may request the second terminal to execute a computing task of the first terminal.

It should be understood that, in an actual network, each of a plurality of second-type terminals broadcasts a computing capability of the terminal. In this case, the first terminal may receive computing capability information of each of the plurality of second-type terminals, and may determine, based on a requirement of the computing task or another criterion, to request one of the plurality of second-type terminals to execute the computing task of the first terminal. The second terminal may broadcast the computing capability information based on a preconfigured resource; or the second terminal may broadcast the computing capability information based on a resource configured by a network device. The resource for broadcasting the computing capability information may be a dedicated resource (UE Specific) configured for a UE, or may be a resource without distinguishing a UE, that is, a non-UE Specific broadcast resource. The resource for broadcasting the computing capability information may be a service-level resource, for example, a broadcast resource configured for an MEC service.

The second terminal may periodically broadcast the computing capability information. Alternatively, the second terminal broadcasts the computing capability information when triggered by a trigger event. For example, the second terminal broadcasts the computing capability information after the computing capability changes. For example, when computing load of the second terminal is less than a preset threshold, the second-type terminal broadcasts the computing capability information.

The first terminal may periodically listen to the computing capability information broadcast by the second terminal. Alternatively, the first terminal is triggered to listen to the computing capability information broadcast by the second terminal. For example, the first terminal needs another terminal to execute the computing task of the first terminal, and the first terminal listens to the computing capability information broadcast by the second terminal. The first terminal determines, based on the computing capability information obtained through listening, a second terminal that can provide a computing service, to request the second terminal to execute the at least one computing task of the first-type terminal.

S102: A first terminal sends a first task request message to the second terminal, and the second terminal receives the first task request message.

S103: The second terminal performs admission control on at least one computing task of the first terminal based on the first task request message.

S104: The second terminal sends a first task request response message to the first terminal, and the first terminal receives the first task request response message.

S105: The first terminal establishes a D2D connection to the second terminal.

S106: The first terminal exchanges computing task data with the second terminal.

The first-type terminal may exchange the computing task data with the second-type terminal by using a sidelink (sidelink, SL) resource scheduled by the network device. Alternatively, the first-type terminal may determine a sidelink resource configured or preconfigured by the network device to exchange the computing task data with the second-type terminal.

It should be understood that, for S102, S103, and S104, refer to related descriptions of the first task request message, the first task request response message, and the like in FIG. 8 or FIG. 9. Details are not described herein again. A difference lies in that signaling interaction between the first terminal and the second terminal in FIG. 10 is based on a D2D manner.

By performing the foregoing steps in this embodiment, interaction between the first terminal and the second terminal does not need to use, for example, a network device, to forward signaling. In this way, signaling overheads of executing a computing task of the first terminal by the second terminal can be reduced.

In an alternative implementation of FIG. 10, FIG. 11 is a flowchart of a fifth network edge computing method according to an embodiment of this application. A specific process of the network edge computing method is described as follows:
S111: A first terminal broadcasts a computing service request message.

The first terminal is any one of first-type terminals. The computing service request message refers to a computing service required for executing at least one computing task of the first terminal. When needing a second terminal to execute the computing task of the first terminal, the first terminal may broadcast the computing service request message. For example, the first terminal may broadcast the computing service request message based on a preconfigured resource; or the first terminal may broadcast the computing service request message based on a resource configured by a network device. The resource for broadcasting the computing service request message may be a dedicated resource (UE Specific) configured for a UE, or may be a resource without distinguishing a UE, that is, a non-UE Specific broadcast resource. Alternatively, the resource for broadcasting the computing service request message may be a service-level resource, for example, a broadcast resource configured for an MEC service. It should be noted that a name of the computing service request message is not limited in this embodiment of this application.

The second terminal may periodically listen to the computing service request message broadcast by the first terminal. Alternatively, when computing load of the second terminal is less than a threshold, the second terminal listens to the computing service request message broadcast by the first terminal. When the second terminal determines that a computing service requirement of the first terminal is satisfied, the second terminal may respond to the computing service request message.

S112: A second terminal sends a computing service response message to the first terminal.

The second terminal is any one of second-type terminals. The second terminal determines that the computing service requirement of the first terminal is satisfied, and the second terminal may send the computing service response message to the first terminal, where the computing service response message may be for indicating that the second terminal can satisfy the computing service requirement of the first-type terminal. Certainly, if the second terminal determines that the computing service requirement of the first terminal cannot be satisfied, the second terminal may not respond to the computing service request message of the first terminal, that is, may not send the computing service response message to the first terminal. It should be noted that a name of the computing service response message is not limited in this embodiment of this application.

S113: A first terminal sends a first task request message to the second terminal, and the second terminal receives the first task request message.

S114: The second terminal performs admission control on at least one computing task of the first terminal based on the first task request message.

S115: The second terminal sends a first task request response message to the first terminal, and the first terminal receives the first task request response message.

S116: The first terminal establishes a D2D connection to the second terminal.

S117: The first terminal exchanges computing task data with the second terminal.

It should be understood that for specific implementation of S113 to S117, refer to related descriptions of the embodiment shown in FIG. 10. Details are not described herein again.

By performing the foregoing steps in this embodiment, when having a computing task requirement, the first terminal may broadcast a computing service request message to obtain latest computing capabilities of a plurality of second terminals, to select a proper second terminal to execute a computing task, thereby saving unnecessary broadcasting of the second terminal and reducing resource overheads.

It should be understood that the second-type terminal can provide a computing service, and therefore may be configured to share computing load on a network side. In other words, the second-type terminal may execute a computing task on the network side. Generally, a computing capability of a terminal side is lower than a computing capability of the network side, and a computing capability of a second-type terminal may not satisfy a computing task requirement on the network side. Therefore, the network side may divide a computing task into a plurality of computing subtasks. The plurality of computing subtasks are independent of each other, that is, execution of one computing subtask does not affect execution of another computing subtask. The network side may request the plurality of second-type terminals on the terminal side to execute the plurality of computing subtasks. In this way, each second-type terminal may execute a proper quantity of computing subtasks based on a computing capability of the second-type terminal, to ensure timely response to a service and improve running efficiency of a network.

The following describes a process of executing a computing task on a network side by a terminal side with reference to accompanying drawings.

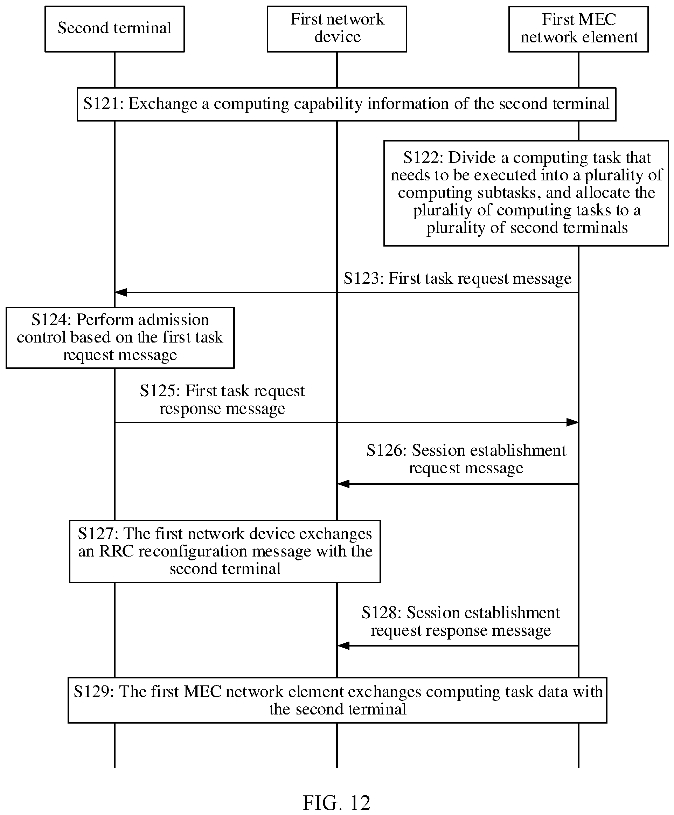

FIG. 12 is a schematic flowchart of a sixth network edge computing method according to an embodiment of this application. A specific process of the method is described as follows:
S121: A second terminal exchanges computing capability information of the second terminal with a first MEC network element.

Specifically, a plurality of terminals in the second-type terminals exchange respective computing capability information with the first MEC network element. Specific implementation of S121 is the same as that of S91. For the specific implementation, refer to related descriptions of S91. Details are not described herein again.

S 122: The first MEC network element divides a computing task that needs to be executed into a plurality of computing subtasks, and allocates the plurality of computing subtasks to a plurality of second-type terminals.

It should be understood that the first MEC network element may store computing capabilities of the plurality of second-type terminals. Different second-type terminals have different computing capabilities, and can provide different computing services. A computing service that can be provided by a second-type terminal may not satisfy a computing task requirement of the first MEC network element. In this case, when the second-type terminal executes the computing task of the first MEC network element, a failure is obviously caused.

Therefore, in this embodiment of this application, the first MEC network element may divide the computing task into the plurality of computing subtasks, and then allocate the plurality of computing subtasks to the plurality of second-type terminals for execution, thereby ensuring that the computing task of the first MEC network is successfully executed. Specifically, the first MEC network element may determine, based on information such as computing load, a communication rate, and an available computing resource of each second-type terminal, a plurality of second-type terminals that are suitable for executing computing subtasks, and allocate a proper quantity of computing subtasks to each second-type terminal. For example, a computing subtask related to privacy data may be allocated to a second-type terminal, to ensure security of the data as much as possible.

Specifically, the first MEC network element determines, from the plurality of second-type terminals whose computing capabilities are learned, second-type terminals which jointly execute a computing task, and may further determine second-type terminals which execute respective computing subtasks. In other words, in this step, the first MEC network element determines target second-type terminals which execute respective target computing sub-tasks. There are a plurality of target second-type terminals and a plurality of target computing subtasks, and a quantity of the target second-type terminals is the same as a quantity of the target computing subtasks.

It should be noted that a manner in which the first MEC network element divides the computing task into the plurality of computing subtasks is not limited in this embodiment of this application. For example, the first MEC network element may split a computing task into a plurality of computing subtasks by splitting an artificial intelligence/machine learning (Split AI/ML) model, for example, federated learning (federated learning) model.

S123: The first MEC network element sends a first task request message to the second terminal, and the second terminal receives the first task request message.

It should be understood that the second terminal in S123 is any one of the plurality of target second-type terminals.

Specifically, the first MEC network element sends the first task request message to each target second-type terminal determined in step S122, where the first task request message includes a service requirement of a target computing subtask that the first MEC network element requests the target second-type terminal to execute.

S124: The second terminal performs, based on the first task request message, admission control on the to-be- executed computing task.

Specifically, each target second-type terminal performs admission control on a received target computing subtask, to determine whether to execute a corresponding target computing subtask.

S125: The second terminal sends a first task request response message to the first MEC network element.

Specifically, after performing admission control, each target second-type terminal sends the first task request response message to the first MEC network element, to indicate whether the target second-type terminal executes a corresponding target computing sub-task.

For specific implementation of S123 to S125, refer to the specific implementation of S731b and S732b in FIG. 7. Details are not described herein again.

S126: The first MEC network element sends a session establishment request message to a first network device, where the session request message is for indicating the first network device to establish a user plane transmission channel from the first network device to each target second-type terminal.

The session establishment request message may include QoS flow configuration information for the computing task allocated to the second terminal, to ensure QoS requirements of different data flows in a computing service. The QoS flow configuration information may include a quality of service flow identifier (QoS flow identity, QFI) and a QoS profile (profile). The configuration information may be generated by a network-side device (for example, an SMF).

S127: The first network device exchanges an RRC reconfiguration message with the second terminal.

The first network device may perform RRC reconfiguration on each target second terminal, to configure a radio bearer of the computing task and a mapping relationship between the radio bearer and the computing task. The radio bearer of the computing task may be a DRB or an RB.

S128: The first network device sends a session establishment request response message to the first MEC network element.

After establishing the user plane transmission channel from the first network device to each target second terminal, the first network device may send the session establishment request response message to the first MEC network element, to notify the first MEC network element that the user plane transmission channel from the first network device to each target second terminal has been established.

S129: The first MEC network element exchanges computing task data with the second terminal.

Specifically, the first MEC network element exchanges computing subtask data with each target second terminal. For a specific implementation of an operation of exchanging, by the first MEC network element, corresponding computing subtask data with one target second terminal, refer to the specific implementation of S704. Details are not described herein again.

By performing the steps in this embodiment of this application, the network can offload some computing tasks to the second-type terminal for execution, thereby saving resources on a network side and fully utilizing resources on a terminal side.

It should be understood that a process of the sixth network edge computing method varies based on different states of the second terminal: connected (RRC_connected), inactive (RRC inactive), and idle (RRC idle). The process shown in FIG. 12 may be considered as a process of offloading a computing task on a network side to a second terminal in a connected state.

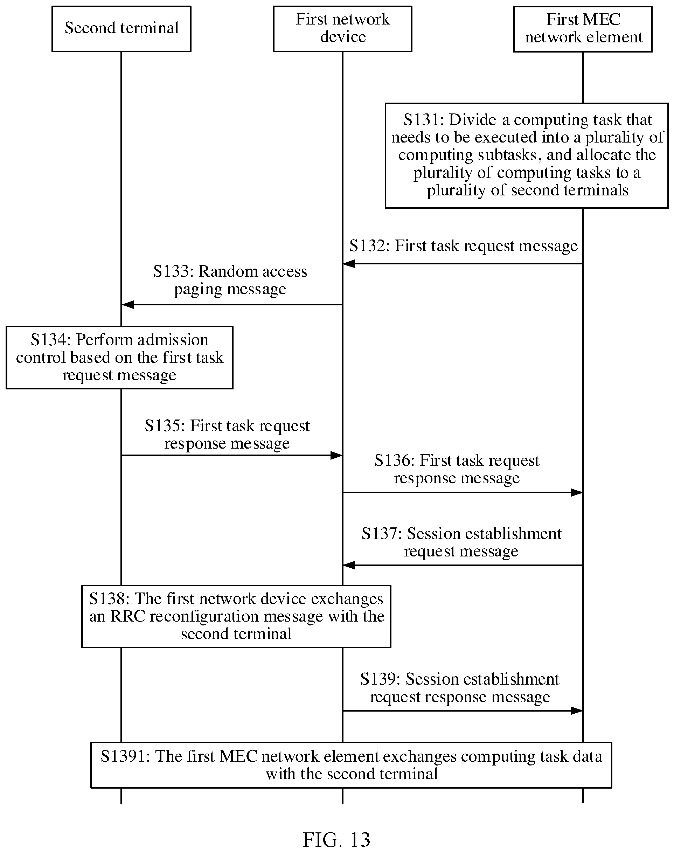

If the second terminal is in an inactive state, a process of offloading a computing task on a network side to the second terminal is shown in FIG. 13. It should be understood that, if the second terminal is in the inactive state, the second terminal has exchanged computing capability information of the second terminal with a first MEC network element. In other words, the first MEC network element has learned a computing capability of the second terminal.

S131: The first MEC network element divides a computing task that needs to be executed into a plurality of computing subtasks, and allocates the plurality of computing subtasks to a plurality of second-type terminals.

S132: The first MEC network element sends a first task request message to a first network device, where the first task request message carries related information of the plurality of second-type terminals.

It should be understood that any one of the plurality of second-type terminals herein is a second terminal that is determined by the first MEC network element and that is configured to execute a computing subtask.

S133: The first network device initiates a random access paging message to a second terminal, where the paging message includes the first task request message.

Specifically, the first network device sends a random access paging message to each of the plurality of second-type terminals, where each paging message includes a request for a computing subtask of each second-type terminal.

S134: The second terminal performs admission control on a computing subtask based on the first task request message.

S135: The second terminal sends a first task request response message to the first network device.

The first task request response message may be an RRC resume request message. It may be considered that the RRC resume request message implicitly indicates that a task request on a network side is accepted; otherwise, the RRC resume request message is not initiated.

S136: The first network device forwards the first task request response message to the first MEC network element.

S137: The first MEC network element sends a session establishment request message to a first network device, where the session request message is for indicating the first network device to establish a user plane transmission channel from the first network device to the second terminal.

S138: The first network device exchanges an RRC reconfiguration message with the second terminal.

The first network device may perform RRC reconfiguration on the second terminal, to configure a radio bearer of the computing task and a mapping relationship between the radio bearer and the computing task. The radio bearer of the computing task may be a DRB or an RB.

S139: The first network device sends a session establishment request response message to the first MEC network element.

S13 91: The first MEC network element exchanges computing task data with the second terminal.

It should be understood that a difference between FIG. 13 and FIG. 12 lies in that S132 to S136 vary because the second terminal is in the inactive mode.

By performing the steps in this embodiment of this application, the network may offload some computing tasks to the second-type terminal in the inactive state for execution. To be specific, in addition to offloading the computing tasks to a second-type terminal in an active state for execution, the network side may further offload the computing tasks to the second-type terminal in the inactive state for execution, thereby fully utilizing resources on a terminal side.

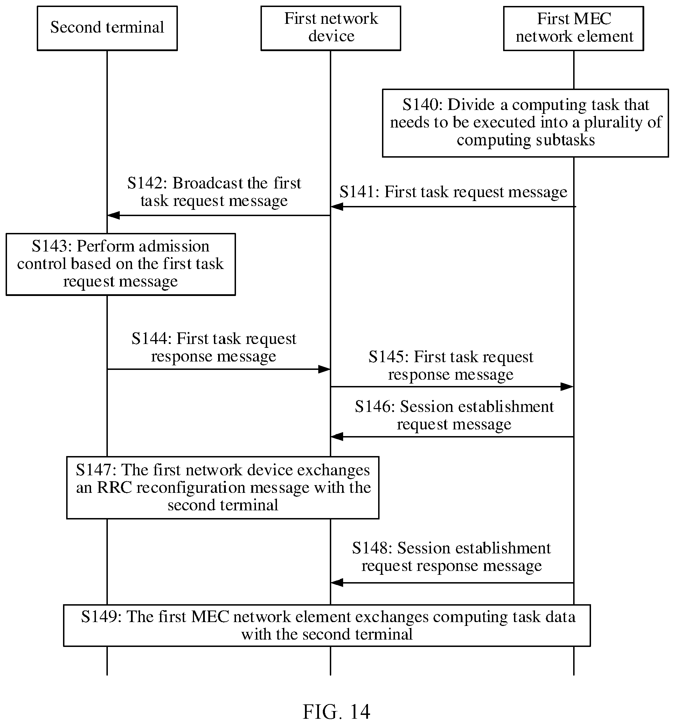

FIG. 14 shows a process of offloading a computing task on a network side to a second terminal in an idle state.

S140: A first MEC network element divides a computing task that needs to be executed into a plurality of computing subtasks.

Because the second terminal is in the idle mode, the first MEC network element does not exchange computing capability information of the second terminal with the second terminal. In this case, the first MEC network element may divide the computing task into the plurality of computing subtasks in advance. Then, one or more second terminals are requested to execute the plurality of computing subtasks, to ensure that each second terminal executes a proper quantity of computing subtasks as much as possible, thereby ensuring an execution success rate of the entire computing task.

S141: The first MEC network element sends a first task request message to a first network device, and the first network device receives the first task request message.

S142: The first network device broadcasts the first task request message.

Because the second terminal is in the idle state, the first network device may broadcast the first task request message. In this way, after receiving the first task request message, the second terminal may determine, based on computing load, computing resources, and the like of the second terminal, whether a computing service requirement of one or more computing subtasks is satisfied. If a second terminal determines that the computing service requirement of the one or more computing subtasks can be satisfied, the second terminal may perform admission control on the one or more computing subtasks based on the first task request message.

S143: A second terminal performs admission control on one or more computing subtasks based on the first task request message.

S144: The second terminal sends a first task request response message to the first network device, and the first network device receives the first task request response message.

A difference from S135 lies in that the first task request response message may be an RRC connection establishment request message.

S145: The first network device sends the first task request response message to the first MEC network element, and the first MEC network element receives the first task request response message.

S146: The first MEC network element sends a session establishment request message to the first network device, where the session request message is for indicating the first network device to establish a user plane transmission channel from the first network device to the second terminal.

Specific implementation of S146 is the same as that of S126. For the specific implementation, refer to related descriptions of S126. Details are not described herein again.

S147: The first network device exchanges an RRC reconfiguration message with the second terminal.

Specific implementation of S147 is the same as that of S127. For the specific implementation, refer to related descriptions of S127. Details are not described herein again.

S148: The first network device sends a session establishment request response message to the first MEC network element.

Specific implementation of S148 is the same as that of S128. For the specific implementation, refer to related descriptions of S128. Details are not described herein again.

S149: The first MEC network element exchanges computing task data with the second terminal.

For specific implementation of S149, refer to the specific implementation of S704. Details are not described herein again.

The first MEC network element does not exchange the computing capability information of the second terminal with the second terminal in the idle state. However, by performing the foregoing steps in this embodiment, the first MEC network element may divide the computing task into the plurality of computing subtasks in advance. Then, one or more second terminals are requested to execute the plurality of computing subtasks, to ensure that each second terminal executes a proper quantity of computing subtasks as much as possible, thereby ensuring an execution success rate of the entire computing task.

In the foregoing embodiments shown in FIG. 12 to FIG. 14, the plurality of computing subtasks are independent of each other, that is, execution of one computing subtask does not affect execution of another computing subtask. In other words, the computing subtasks may be considered to be executed in parallel. However, in practice, there may alternatively be an input/output logical relationship between the plurality of computing subtasks. For example, for execution of one computing subtask, reference needs to be made to an execution result of another computing subtask. In this case, it may be considered that the computing subtasks are executed in serial. A computing task that has an input/output logical relationship can be understood as a computing task of a service function chain (service function chain, SFC).

The SFC is usually combined with software-defined networking (software-defined networking, SDN). The SDN mainly provides two types of services. For example, the first type is to provide a networking infrastructure (networking infrastructure) function, and may also be understood as providing a network connectivity function of each terminal device (for example, a virtual machine) in the SDN. In another example, the second type is to provide a networking service (networking service) function, for example, provide a networking service (networking As A Service), a load balancing function, a firewall function, a QoS function, and the like for an SDN user. The SFC is a flexible way to implement networking services. Cloud service carriers provide various service functions. The SDN manages the SFC and adds service functions to a network traffic path to implement networking services.

An embodiment of this application further provides an SFC-based MEC mechanism, where resource scheduling precision can be improved by reducing a task scheduling granularity, thereby improving computing resource utilization of a system.

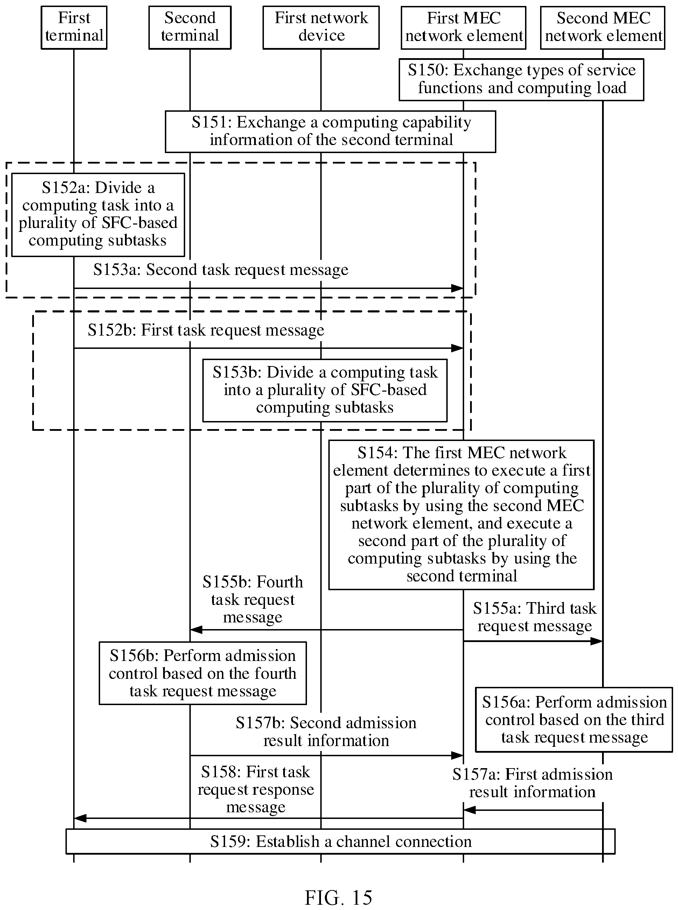

FIG. 15 shows an SFC-based MEC method according to an embodiment of this application. The method may be used in the MEC network architecture shown in FIG. 3, that is, an example in which an MEC function is set on each of a network side and a terminal side is used. In FIG. 15, an example in which a computing task of a first terminal is executed by a second-type terminal and a plurality of MEC network elements (for example, a first MEC network element and a second MEC network element) is used. A specific process of the method is described as follows:
S150: A first MEC network element and a second MEC network element exchange respective supported types of service functions and computing load.

For specific implementation of S150, refer to the foregoing specific description of S82b. A difference from S82b lies in that content exchanged between the first MEC network element and the second MEC network element in S150 is different from that in S82b. In this embodiment of this application, the first MEC network element may notify the second MEC network element of a type of a service function (also referred to as a service function type) supported by the first MEC network element and current computing load corresponding to the service function type. Similarly, the second MEC network element may notify the first MEC network element of a service function type supported by the second MEC network element and current computing load corresponding to the service function type. In this way, the first MEC network element and the second MEC network element may properly allocate a plurality of computing subtasks based on the respective supported service function types.

S151: A second-type terminal exchanges computing capability information of the second-type terminal with the first MEC network element.

Specifically, a plurality of terminals in the second-type terminals exchange respective computing capability information with the first MEC network element. For specific implementation of S151, refer to the specific description of S91. Details are not described herein again. It should be noted that a sequence of performing S150 and S 151 is not limited in this embodiment of this application. In other words, S 150 may be performed after S151, or S151 is performed before S150.

Then, a first terminal may request a network side to execute a computing task of the first terminal. In a possible implementation, the first terminal may divide the computing task into a plurality of SFC-based computing subtasks, and then request the network side to execute the plurality of computing subtasks, that is, perform S152a and S153a. In another possible implementation, the first terminal may request the network side to execute the computing task of the first terminal. The network side divides the computing task of the first terminal into a plurality of SFC-based computing subtasks, and then executes the plurality of computing subtasks, that is, performs S152b and S153b.

S152a: A first terminal divides a computing task into a plurality of SFC-based computing subtasks.

The first terminal may divide the computing task that needs to be executed into the plurality of SFC-based computing subtasks. For example, the first terminal may model the computing task as an SFC model, to obtain a plurality of computing subtasks. A method for establishing the SFC model is not limited in this embodiment of this application. For example, a first-type terminal divides a computing task into six SFC-based computing subtasks, where the six computing subtasks form a linear topology structure. It is assumed that an index of the six computing subtasks is {1, 2, 3, 4, 5, 6}, and a linear topology structure is formed.

S153a: The first terminal sends a second task request message to the first MEC network element, and the first MEC network element receives the second task request message.

After obtaining a plurality of SFC-based computing subtasks, the first terminal may send a task request message, for example, the second task request message to the first MEC network element, to request the first MEC network element to execute the plurality of computing subtasks. An implementation of the second task request message is the same as the implementation of the first task request message in S731b. A difference from the first task request message in S731b lies in that content carried in the second task request message includes a plurality of SFC-based computing subtasks, a logical topology relationship between the plurality of computing subtasks, and a service requirement of each computing subtask. An example in which the plurality of computing subtasks are six computing subtasks is used, and an index of the six computing subtasks is {1, 2, 3, 4, 5, 6}. In this case, a logical topology relationship between the six computing subtasks may be, for example, 1->2->...->6, that is, the second computing subtask can be executed only based on an execution result of the first computing subtask, the third computing subtask can be executed only based on an execution result of the second computing subtask, and so on.

S152b: The first terminal sends a first task request message to the first MEC network element, and the first MEC network element receives the first task request message.

For specific implementation of S152b, refer to the related descriptions of S731b. Details are not described herein again.

S153b: The first MEC network element divides a computing task into a plurality of SFC-based computing subtasks.

After receiving the first task request message, the first MEC network element may obtain the computing task that the first terminal requests to execute. The first MEC network element may divide the computing task into a plurality of SFC-based computing subtasks based on a computing requirement of the computing task and with reference to network elements (for example, the second MEC network element and the second-type terminal) that provide a computing service in a network.

For example, the first MEC network element may divide, based on parameters such as computing capabilities of network elements providing a computing service, a link status between the network elements, and delay requirements, a computing task that the first-type terminal requests to execute, to obtain a plurality of computing subtasks. For example, the first MEC network element divides the computing task into six computing subtasks, and an index of the six computing subtasks is {1, 2, 3, 4, 5, 6}.

S154: The first MEC network element determines to execute a first part of the plurality of computing subtasks by using the second MEC network element, and execute a second part of the plurality of computing subtasks by using the second-type terminal. It should be noted that the first MEC network element may request one or more second MEC network elements and/or one or more second terminals to execute the plurality of computing subtasks. For example, the first MEC network element may request one or more second MEC network elements to execute a first part of the plurality of computing subtasks, and request one or more second terminals to execute a second part of the plurality of computing subtasks. Alternatively, the first MEC network element may request one or more second MEC network elements and one or more second terminals to execute a first part of the plurality of computing subtasks, and request one or more other second terminals to execute a second part of the plurality of computing subtasks.

Further, the first MEC network element may further select an appropriate network element from the network elements based on parameters such as computing capabilities of the network elements, a link status between the network elements, and delay requirements, to execute some computing subtasks. For example, the first MEC network element divides the computing task into three parts, indexes of computing subtasks included in the three parts are respectively { 1, 2}, {3, 4}, and {5, 6}, and the three parts of computing subtasks are respectively executed by the first MEC network element, the second MEC network element, and the second-type terminal.

S155a: The first MEC network element sends a third task request message to the second MEC network element, and the second MEC network element receives the third task request message.

After determining a first part of computing subtasks (for example, a computing subtask 3 and a computing subtask 4) that need to be executed by a second MEC network element, the first MEC network element may send the third task request message to the second MEC network element. In other words, the second MEC network element is one of the one or more second MEC network elements determined by the first MEC network element in S154a. For specific implementation of the third task request message, refer to the related descriptions of S832b. Details are not described herein again. It should be understood that, in addition to the first part of computing subtasks, the third task request message further carries a logical relationship between the first part of computing subtasks, that is, 3->4. The third task request message may further carry a computing requirement of the first part of computing subtasks.

S156a: The second MEC network element performs admission control on the first part of computing subtasks based on the third task request message.

After receiving the third task request message, the second MEC network element may perform admission control on the first part of computing subtasks based on information such as load of the current computing task of the second MEC network element and a network status. For details, refer to related descriptions of S834a. Details are not described herein again.

S157a: The second MEC network element sends first admission information to the first MEC network element, and the first MEC network element receives the first admission information.

After performing admission control on the first part of computing subtasks, the second MEC network element may feed back the first admission information to the first MEC network element. For example, the second MEC network element may send a third task request response message, that is, a response to the third task request message to the first MEC network element. The third task request response message may carry the first admission information. For details, refer to the related descriptions of S834b. Details are not described herein again.

S155b: The first MEC network element sends a fourth task request message to a second terminal, and the second terminal receives the fourth task request message. The second terminal is any one of the one or more second-type terminals determined by the first MEC network element in step S154.

After determining a second part of computing subtasks (for example, a computing subtask 5 and a computing subtask 6) that need to be executed by the second terminal, the first MEC network element may send the fourth task request message to the second terminal. For specific implementation of the fourth task request message, refer to the related descriptions of S123. Details are not described herein again. It should be understood that, in addition to the second part of computing subtasks, the fourth task request message further carries a logical relationship between the second part of computing subtasks, that is, 5->6. The fourth task request message may further carry a computing requirement of the second part of computing subtasks.

S156b: The second terminal performs admission control on the second part of computing subtasks based on the fourth task request message.

After receiving the fourth task request message, the second terminal may perform admission control on the second part of computing subtasks based on information such as load of the current computing task of the second terminal and a network status. For details, refer to related descriptions of S124. Details are not described herein again.

S157b: The second terminal sends second admission information to the first MEC network element, and the first MEC network element receives the second admission information.

After performing admission control on the second part of computing subtasks, the second terminal may feed back the second admission information to the first MEC network element. For example, the second terminal may send a fourth task request response message to the first MEC network element, that is, a response to the fourth task request message. The fourth task request response message may carry the second admission information. For details, refer to the related descriptions of S125. Details are not described herein again.

It should be noted that in this embodiment of this application, a sequence of performing S15 5a and S15 5b is not limited, a sequence of performing S156a and S156b is not limited, and a sequence of performing S157a and S157b is not limited.

S158: The first MEC network element sends a first task request response message to the first terminal, and the first terminal receives the first task request response message.

After receiving the third task request response message and the fourth task request response message, the first MEC network element may send the first task request response message to the first terminal, to notify the first terminal of admission information of the computing task that the first terminal requests to execute. For details, refer to the related descriptions of S733b. Details are not described herein again.

S159: The first terminal establishes a channel connection to the first MEC network element, the second MEC network element, and the second terminal.

It should be understood that a user plane tunnel between computing task bearing nodes of the first terminal needs to be established to transmit computing task data through the tunnel. In this embodiment of this application, the computing task that the first terminal requests to execute is divided into the plurality of computing subtasks, and the plurality of computing subtasks are executed by the first MEC network element, the second MEC network element, and the second terminal. To be specific, a transmission path of the computing task is the first terminal -> the first MEC network element -> the second MEC network element -> the second terminal -> the first terminal. In this case, a user plane tunnel between the first terminal and the first MEC network element, a user plane tunnel between the first MEC network element and the second MEC network element, a user plane tunnel between the second MEC network element and the second terminal, and a user plane tunnel between the second terminal and the first terminal need to be established.

For example, for a process of establishing the user plane tunnel between the first terminal and the first MEC network element, refer to related descriptions of S126 to S128. Details are not described herein again.

For example, in a process of establishing the user plane tunnel between the first MEC network element and the second MEC network element, the first MEC network element and the second MEC network element may exchange related information of establishment of the user plane tunnel through an X interface between the first MEC network element and the second MEC network element. For example, the first MEC network element sends a session establishment request message to the second MEC network element through the X interface, to request to establish the user plane tunnel between the first MEC network element and the second MEC network element.

For example, for a process of establishing the user plane tunnel between the second MEC network element and the second terminal, refer to related descriptions of S126 to S128. Details are not described herein again.

For example, for a process of establishing the user plane tunnel between the second terminal and the first terminal, refer to related descriptions of S921 or S931. Details are not described herein again.

After channels between the first terminal and the first MEC network element, the second MEC network element, and the second terminal are connected, the nodes exchange computing task data. In a process of establishing the user plane tunnel, the first MEC network element may indicate the second MEC network element to send, after completing processing, the data to the second terminal for processing. Alternatively, after completing processing, the second MEC returns the data to the first MEC network element, and then the second MEC network element forwards the data to the second terminal for processing. Similarly, the second terminal may directly send a final result to the first terminal, or forward a final result to the first terminal through the first MEC network element.

Based on the SFC-based MEC mechanism provided in this embodiment of this application, resource scheduling precision can be improved by reducing a task scheduling granularity, thereby improving computing resource utilization of a system.

For processing of some services, for example, an AR service or a VR service, rendering processing is involved. If local rendering needs to be processed by an MEC function, a packet filtering function needs to be configured on a network side at a network edge to ensure that a packet obtained through processing by the MEC function can be mapped to a correct QoS flow. It should be understood that, for a packet (also referred to as a downlink packet) sent by the network side to a terminal side, a UPF classifies the packet based on a packet filter (packet filter) in a packet detection rule (packet detection rule, PDR), and maps the packet to a corresponding QoS flow; and for an uplink packet sent by the terminal side to the network side, the terminal side classifies the packet based on a packet filter in a QoS rule. The packet filters mainly include an IP packet filter and an Ethernet packet filter. For details, see related content in 3GPP protocol specification TS23.501.

In an example, based on the MEC architecture shown in FIG. 1, a terminal may establish a local PDU (L_PDU) session with an EAS by using a local (local) UPF (L_UPF), and a cloud server (cloud server, CS) sends, through a public network, data to the EAS for intermediate processing (local rendering). After processing the data, the EAS sends the data to the terminal by using the L_PDU session.

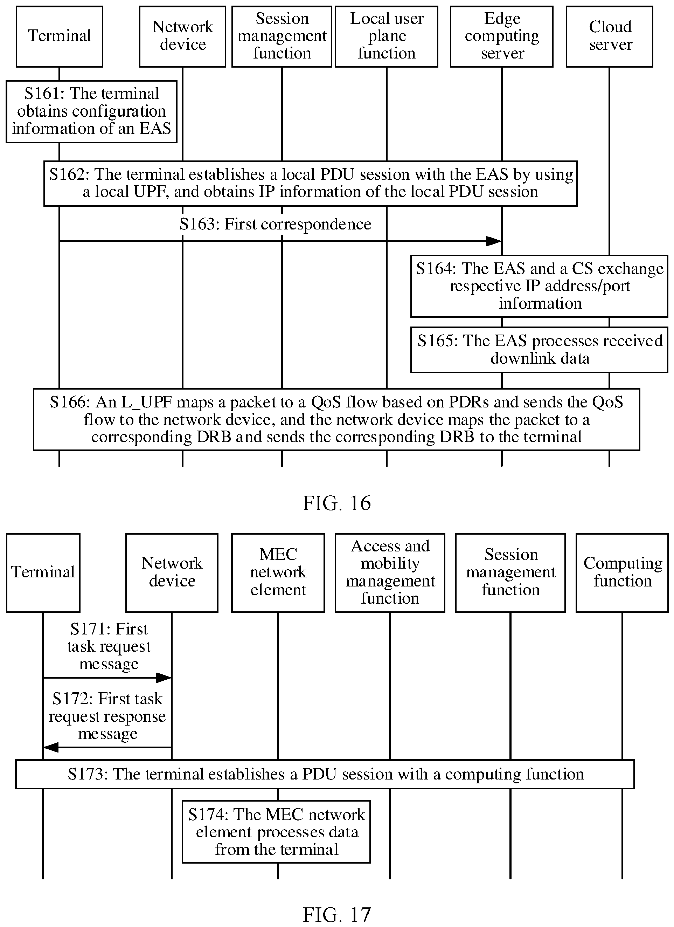

Specifically, refer to FIG. 16, showing an intermediate rendering signaling interaction process used in an existing MEC architecture. The process includes the following steps.

S161: A terminal obtains configuration information of an EAS.

The configuration information of the EAS may include Internet Protocol (Internet Protocol, IP) or port (port) information (IP address/port information for short) of a transmit end and IP address/port information of a receive end, or may include MAC address information of a transmit end and MAC address information of a receive end. The terminal may obtain the configuration information of the EAS through a computing service discovery process, for example, an edge enabler server (Edge Enabler Server, EES)/edge configuration server (Edge Configuration Server, ECS).

S162: The terminal establishes a local PDU session with the EAS by using a local UPF, and obtains IP information of the local PDU session.

The IP information may be an internal IP address/port information, or may be a public IP address/port information. Information exchanged between the terminal and the EAS is based on PDRs configured by a session management function (session management function, SMF) for the L_UPF. It should be noted that the PDRs herein represent one or more PDRs. For example, for PDRs of a CS, an IP address/port value of a transmit end in a packet filter is an IP address/port of the CS; and for PDRs of an EAS, an IP address/port value of a transmit end in a packet filter is an IP address/port of the EAS. It should be understood that the EAS is located after the UPF, a source address of a received packet is a public IP address/port of the UE, and the EAS interacts with the UPF based on the public IP address/port of the terminal. For example, the terminal obtains a public network IP address/port corresponding to the PDU session, and notifies the EAS, so that the EAS can send a processed packet to a correct destination address (UPF). If the terminal notifies the EAS only of the internal IP address corresponding to the PDU session, the EAS may not find the destination address in a public network.

It should be noted that a PDU session of a terminal in a 3GPP network (an internal network) has only an internal IP address, and has no port number (port). The UPF is responsible for mapping the internal IP address of the PDU session to an IP address/port corresponding to the public network. After downlink data arrives at the UPF, the UPF distinguishes a PDU session of a target UE based on a destination IP address/port (that is, a public destination IP address/port) of the packet.

The terminal may establish a local PDU session with the EAS by using a local UPF, thereby obtaining IP information of the local PDU session. Alternatively, the terminal may establish connections to the EAS and the CS by using a single PDU session, to obtain IP information of the local PDU session. Alternatively, the terminal establishes a local PDU session and a default (default) PDU session with the EAS and the CS respectively, and then obtains IP information of the local PDU session.

S163: The terminal sends a first correspondence to the EAS.

The first correspondence is for indicating a correspondence between an L_PDU session and a CS. For example, the correspondence may be a correspondence between an internal IP of L_PDU session and an IP address/port of the CS, or may be a correspondence between a public IP address/port of L_PDU session and an IP address/port of the CS. The EAS may perform intermediate processing, for example, rendering processing, on data from the CS based on the first correspondence.

S164: The EAS and a CS exchange respective IP address/port information.

The EAS may communicate with the CS in the public network based on the TCP/IP or Ethernet protocol and based on the first correspondence, to obtain the IP address/port of the EAS. Then, the EAS may indicate the CS to send downlink data from the terminal to the EAS.

S165: The EAS processes received downlink data.

After receiving the downlink data, the EAS processes the downlink data and generates a new Transmission Control Protocol (transmission control protocol, TCP) TCP/IP packet. It should be understood that for a structure of the TCP packet, refer to a definition in the TCP protocol, and for a structure of the IP packet, refer to a definition in the IP protocol. The IP packet is sent to a specified terminal based on IP address information, and the TCP packet is sent to a correct application based on a port number.

The EAS may change the IP address/port of the transmit end of the packet to the IP address/port of the CS, and the IP address/port of the receive end to the IP address/port of the L_PDU session. The L_UPF filters, based on the PDRs of the CS in S162, the packet sent by the transmit end. Alternatively, the EAS does not process the packet. To be specific, the IP address/port of the transmit end is still the IP address/port of the EAS, and the IP address/port of the receive end is the IP address/port of the L_PDU session. The L_UPF filters, based on the PDRs of the EAS in S162, the packet sent by the transmit end.

S166: An L_UPF maps a packet to a QoS flow based on PDRs and sends the packet to a network device, and the network device maps the QoS flow to a corresponding DRB and sends the packet to the terminal.

In this embodiment of this application, because the terminal sends the first correspondence to the EAS, in an MEC application scenario of multi-level processing, it can be ensured that a QoS mapping relationship of a packet remains unchanged in a transmission and processing process, thereby ensuring a QoS requirement of a service.

The following describes a possible intermediate rendering signaling interaction process based on the MEC network architecture shown in FIG. 3 in an embodiment of this application. A difference from FIG. 16 lies in that the terminal needs to perform a discovery and computing task allocation process of a computing function on a network side, for example, a cloud server (cloud server, CS) by using an MEC management function. Then, the terminal establishes a PDU session connection to the computing function. After downlink data reaches the network device, the network device forwards the downlink data to a corresponding computing server for processing. The computing server processes the downlink data, and feeds back processed data to the network device. The network device maps the processed data to a corresponding DRB and sends the data to the terminal. It should be noted that the MEC management function does not participate in a data transmission and processing process.

Specifically, referring to FIG. 17, the process includes the following steps.

S171: A terminal sends a first task request message to an MEC network element, and the MEC network element receives the first task request message.

The first task request message may be for requesting the MEC network element to execute at least one computing task of the terminal. The first task request message may include related information of a computing function, for example, IP address/port information of a CS.

After receiving the first task request message, the MEC network element selects a proper first computing server based on computing capability information of computing servers registered with the MEC network element. Then, the MEC network element sends the first task request message to the first computing server.

The computing server performs, based on the first task request message, admission control on the at least one computing task that the terminal requests to execute. Then, the computing server may send admission information of the at least one computing task to the MEC network element. For example, the computing server sends a first task request response message to the MEC network element, where the first task request response message carries the admission information of the at least one computing task. Certainly, if the computing server refuses to execute the at least one computing task of the terminal, the first task request response message may be for indicating that the computing server refuses to execute the at least one computing task of the terminal.

S172: The terminal receives a first task request response message sent by the MEC network element.

After receiving the first task request response message from a computing server, the MEC network element may forward the first task request response message to the terminal. The first task request response message sent by the MEC network element may include admission information of at least one computing task, identification information of the computing server, and IP address/port information of the computing server.

S173: The terminal establishes a PDU session with a computing function.

The terminal may add to-be-processed data to the PDU session, and send the PDU session to a network device. Therefore, before sending the data, the terminal may establish the PDU session with the computing function, for example, a CS. For example, the terminal may send a CS-oriented PDU session establishment request message by using an access and mobility management function (access and mobility management function, AMF), to request to establish the PDU session with the CS. The PDU session establishment request message carries information about a computing server, for example, identification information of the computing server and IP address/port information of the computing server.

The AMF notifies the network device of a mapping relationship between the PDU session and the computing server, and indicates the network device to send data from the PDU session to the computing server for processing. The mapping relationship between the PDU session and the computing server may be a mapping relationship between an IP of the PDU and an IP address/port of the computing server, or may be a mapping relationship between a general packet radio service (general packet radio service, GPRS) tunneling protocol (GTP) tunnel endpoint identifier (tunnel endpoint identifier, TEID) for identifying a tunnel and an IP address/port of the computing server.

In a process in which the UE establishes the PDU session with the CS, an SMF may configure PDRs based on the computing server or the CS for the network device, as described in S 172.

S 174: The MEC network element processes data from the terminal.

Different from the embodiment shown in FIG. 16, by performing the foregoing steps in this embodiment of this application, the AMF notifies the network device of the mapping relationship between the PDU session and the computing server. In this way, in a process of performing multi-level processing on a computing task based on the MEC network architecture shown in FIG. 3, it can be ensured that a QoS mapping relationship of a packet remains unchanged in a transmission and processing process, thereby ensuring a QoS requirement of a service.

After establishing the session with the computing function, the terminal may add to-be-processed data to the PDU session and send the PDU session to the network device, and the network device sends the data from the PDU session to the computing server for processing. For different cases of a tunnel between the network device and the computing server, data processing processes of the MEC network element are also different.

First case: A QoS flow granularity GTP-U tunnel is established between the network device and the computing server.

Because the QoS flow granularity GTP-U tunnel is established between the network device and the computing server, in a process of establishing a PDU session, the SMF notifies, by using the AMF, the network device of QoS flows which are included in the PDU session, a QFI corresponding to each QoS flow, and a corresponding QoS profile. The network device establishes a GTP-U tunnel from the network device to the computing server (or the MEC network element) for each QoS flow in the PDU session. Certainly, if only a part of QoS flows need to be processed, a session establishment request may specify the part of QoS flows, and the network device establishes GTP-U tunnels from the network device to the computing server (or the MEC network element) for the part of QoS flows in the PDU session respectively. GTP-U tunnels, from the network device to the computing server, corresponding to different QoS flows may be distinguished by using a TEID of the network device to a TEID of the computing server RS. GTP-U tunnels, from the network device to the computing server, corresponding to different QoS flows indicate processing information corresponding to the different QoS flows.

In this case, after receiving the data from the terminal, the network device maps the data of the QoS flow to a corresponding QoS flow tunnel and sends the data to the computing server if the data of the QoS flow needs to be locally processed based on a QFI in a GTP-U header; otherwise, maps the data to a corresponding air interface DRB.

The computing server receives the data from the tunnel, and records a tunnel ID corresponding to each packet. The ID may be a QFI or a TEID. After processing the packet, the computing server sends the processed packet to the network device through the tunnel receiving the packet.

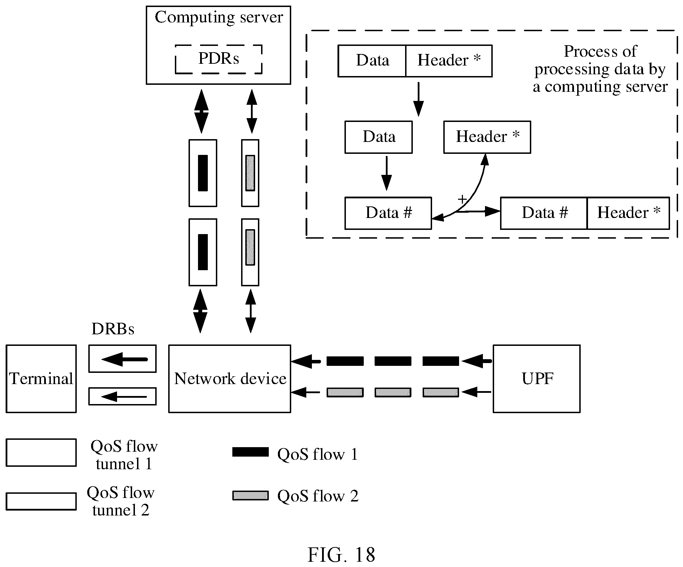

FIG. 18 shows a process of processing a packet by a computing server. The process of processing a packet by the computing server includes but is not limited to the following two cases.

Process 1: The computing server separately processes only a packet from each QoS flow tunnel, where a quantity of packets input through each tunnel may be different from a quantity of packets output through the tunnel.

Specifically, the computing server removes and stores an original header of a packet transmitted from a QoS flow tunnel, and processes data. The original header is re-added to the processed data. An example in which the packet is an IP packet is used. It may be considered that the header includes a packet quintuple, for example, parameters such as IP address/port information of a transmit end, IP address/port information of a receive end, and a protocol type. The header may further include other data-related header elements, such as a total data length, a sequence number, and the like. After processing the data, the computing server adds the original header to the data, where a packet quintuple of the added header remains unchanged, and other data-related header elements may be correspondingly modified based on an actual data situation. Similarly, if the data includes an Ethernet packet, corresponding parameters in an Ethernet packet filter also remain unchanged, and data-related parameters may be correspondingly modified based on an actual data processing situation.

Process 2: The computing server mixes and processes packets of different QoS flow tunnels. In this case, a data filtering function (packet filter) needs to be configured for the computing server. When a PDU session is established, an SMF may send a related packet filter configuration parameter to an MEC network element (by using an AMF or a network device), and then the MEC network element configures the related packet filter configuration parameter for the computing server. After processing original data, the computing server generates a new packet, where the new packet may be an IP packet or an Ethernet packet. The computing server sends the generated packet, namely, may filter and classify the generated packet by using a packet filter, map the packet to different QoS flows, and send the packet to the network device by using a corresponding QoS flow tunnel based on a corresponding QFI.

The network device maps, to a corresponding air interface DRB based on stored mapping relationships between a QoS flow tunnel and a PDU session and between a QoS flow tunnel and a QoS flow, the data sent by the computing server. If only a part of QoS flows in the PDU session need to be processed, to ensure that processed data and unprocessed data arrive at a destination end simultaneously, a processing delay of the computing server and a delay of round-trip data transmission between the computing server and the network device may be subtracted from a packet delay budget (packet delay budget, PDB) of the processed packet.

Considering that a processed QoS flow and an unprocessed QoS flow may need to be mapped to a same DRB, in this case, queue jump in a buffer performed based on remaining PDBs of packets needs to be considered, for example, a packet with a small remaining PDB is preferentially sent. Alternatively, a buffer of each QoS flow may be introduced at an SDAP layer to buffer data, and a packet with a small survival time is preferentially injected to a PDCP layer based on survival times (survival time) of packets.

It should be noted that in this embodiment of this application, a header of a packet is processed only for an outer IP header (outer IP header) of the packet, that is, a transmission-related header. Processing of application-layer data such as a header of a data payload is not involved. The outer IP header and the header of the data payload herein are relative to IP encapsulation within IP (IP Encapsulation within IP), which may be briefly referred to as IP-in-IP. IP-in-IP describes how to obtain an IP packet and use the IP packet as a payload of another IP packet. For details, refer to a process of encapsulating data based on mobile IP.

Second case: A PDU session granularity GTP-U tunnel is established between the network device and the computing server.

Because the PDU session granularity GTP-U tunnel is established between the network device and the computing server, in a process of establishing a PDU session, a core network device such as an SMF, an AMF, or an MEC network element may indicate to the network device that intermediate processing needs to be performed on the PDU session, and the PDU session carries corresponding local processing information. The network device establishes the PDU session granularity GTP-U tunnel from the network device to the computing server or the MEC network element, and records a correspondence between an N3 tunnel (from the network device to the UPF) and the foregoing tunnel (from the network device to the computing server).

After receiving data sent by the core network device, the network device sends the data to the computing server through the corresponding tunnel based on the tunnel mapping relationship. After receiving the data from the tunnel, the computing server processes the data, and sends a processed packet to the network device. The network device maps, based on a QFI corresponding to the packet, the data returned by the computing server to a corresponding air interface DRB.

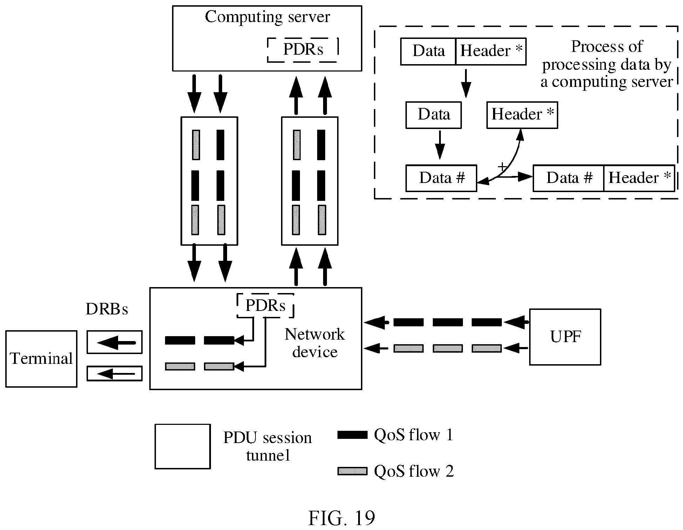

FIG. 19 shows another process of processing a packet by a computing server. After receiving data from a tunnel, the computing server may process the received data in the following three processing manners.

Processing manner 1: The computing server performs uniform processing on packets with a same QFI.

Specifically, the computing server places data into a corresponding input queue based on a tunnel ID corresponding to each piece of data and a QFI in a GTP-U header. It should be understood that different QFIs correspond to different input queues. After processing the data, the computing server adds a header to the processed data, where a header element is consistent with header information of the received data. For details, refer to the related descriptions of the case 1 in the foregoing first scenario. Details are not described herein again.

Processing manner 2: The computing server has a packet filtering function, and may send a packet to a network device through a corresponding GTP-U tunnel by using the packet filtering function. For details, refer to the related descriptions of the case 2 in the foregoing first scenario. Details are not described herein again.

Processing manner 3: If the computing server does not have a packet filtering function, the computing server may send a processed packet to a network device through a corresponding PDU session granularity tunnel. The network device filters the packet, and maps the packet to a corresponding QoS flow. For example, the network device is configured with the packet filtering function.

Third case: No tunnel exists between the network device and the computing server.

No tunnel exists between the network device and the computing server. The network device learns, in a process of establishing a PDU session, that local processing needs to be performed on all QoS flows or some QoS flows of the PDU session, and detailed information about the local processing.

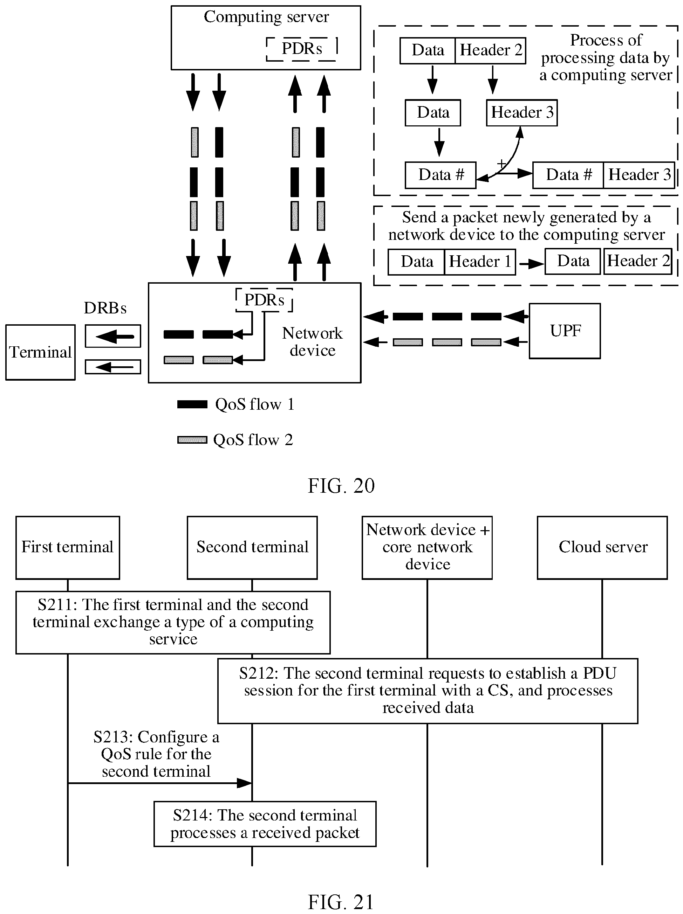

FIG. 20 shows still another process of processing a packet by a computing server. After a network device receives data sent by a core network device, the network device may remove an original header (for example, referred to as a header 1) to generate a new packet. A header of the new packet is, for example, referred to as a header 2. For example, the packet is an IP packet, the network device does not process the packet, and the header 1 included in the packet includes IP address/port information of a transmit end (CS, cloud server) and IP address/port information of a PDU session of a receive end (terminal). After the network device processes the packet, the header 2 included in the packet includes IP address/port information of a transmit end (gNB) and IP address/port information of a receive end (RS, computing server). A difference lies in that the header 2 and the header 1 include different IP address/port information of the transmit end and different IP address/port information of the receive end. The network device may send the processed packet to the computing server based on the TCP/IP or the Ethernet protocol, and the computing server processes the packet. After processing the packet, the computing server adds a header such as a header 3 to the packet, where the header 3 includes IP address/port information of the transmit end, that is, the CS, and the header 3 includes an IP address of a PDU session of the receive end, that is, the terminal. Then, the computing server sends the packet with the re-added header to the network device. The network device filters the packet based on configured PDRs, maps the packet to a corresponding QoS flow, and then maps the packet to a corresponding DRB and sends the packet to the terminal.

It should be understood that the computing task executed by the first terminal may be rendered on the second terminal. FIG. 21 is a schematic flowchart of D2D local rendering according to an embodiment of this application. The process includes the following steps.

S211: A first terminal and a second terminal exchange a type of a computing service.

For specific implementation of S211, refer to descriptions of related embodiments in FIG. 9, FIG. 10, and FIG. 11. Details are not described herein again.

S212: The second terminal requests to establish a PDU session for the first terminal with a CS, and processes received data.

After receiving a request of the first terminal to execute at least one computing task, the second terminal may request to establish a PDU session connection to the CS, where the PDU session connection may be for relaying data of the first terminal. In addition, the second terminal may be indicated to process the data from the first terminal. A core network device may separately allocate IP addresses for the second terminal and the first terminal to the PDU session, to determine a transmit end and a receive end of the data. Optionally, the core network device may configure a QoS rule for the second terminal. It should be understood that the QoS rule may be for mapping a packet to a DRB.

S213: The first terminal configures a QoS rule for the second terminal.

In this embodiment of this application, the first terminal and the second terminal may transmit a packet in a D2D manner. Specifically, the first terminal may configure the QoS rule for the second terminal by using sidelink reconfiguration information (sidelink reconfiguration, SL reconfiguration), to map a packet on a D2D side to a DRB.

It should be noted that S213 is not a mandatory step, and therefore is shown by using a dashed line in FIG. 21.

S214: The second terminal processes a received packet.

A packet sent by the CS arrives at the second terminal, and the second terminal may process the received packet, for example, remove an original header of the packet, and process data of the packet. Then, a new header is added to the processed packet. For example, the new header includes an IP address/port of a transmit end, that is, the CS, and an IP address of a receive end, that is, the first terminal. Then, the second terminal may map the IP packet to a corresponding QoS flow based on the QoS rule, and then send the IP packet to the first terminal by using a corresponding SL RB.

By performing the foregoing steps in this embodiment of this application, in a process of performing multi-level processing on a computing task between terminals, it can be ensured that a QoS mapping relationship of a packet remains unchanged in a transmission and processing process, thereby ensuring a QoS requirement of a service.

In the foregoing embodiments provided in this application, the methods provided in embodiments of this application are separately described from a perspective of interaction between the terminals, the network devices, the MEC network elements, and the like. To implement functions in the foregoing methods provided in embodiments of this application, the terminal and the network device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

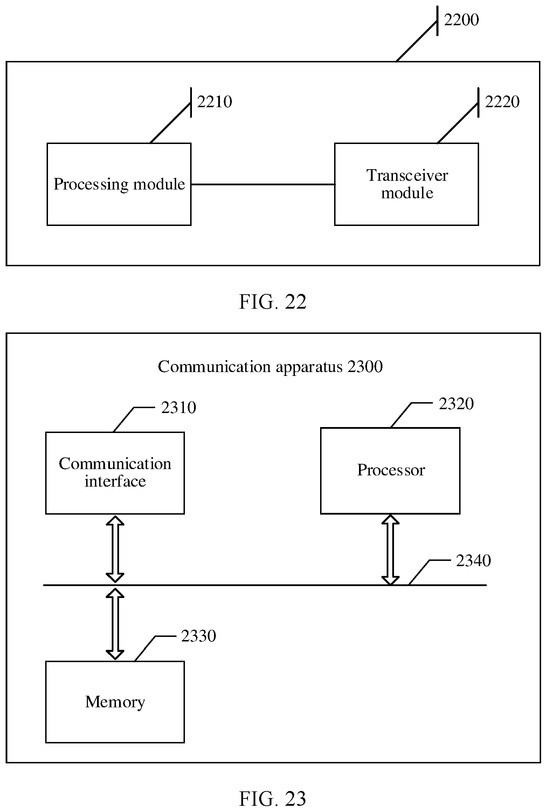

FIG. 22 is a schematic block diagram of a communication apparatus 2200 according to an embodiment of this application. The communication apparatus 2200 may correspondingly implement functions or steps implemented by the terminal or the base station in the foregoing method embodiments. The communication apparatus may include a processing module 2210 and a transceiver module 2220. Optionally, the communication apparatus may further include a storage unit. The storage unit may be configured to store instructions (code or a program) and/or data. The processing module 2210 and the transceiver module 2220 may be coupled to the storage unit. For example, the processing module 2210 may read instructions (code or a program) and/or data in the storage unit, to implement a corresponding method. The foregoing units may be disposed independently, or may be partially or completely integrated.

In some possible implementations, the communication apparatus 2200 can correspondingly implement behavior and functions of the terminal in the foregoing method embodiments. For example, the communication apparatus 2200 may be a terminal, or may be a component (for example, a chip or a circuit) used in a terminal. The transceiver module 2220 may be configured to perform all receiving or sending operations performed by the terminal, the network device, or the first MEC function, and another device in the embodiment shown in any one of FIG. 9 to FIG. 17. The processing module 2210 is configured to perform all operations, except the sending and receiving operations, performed by the terminal, the network device, or the first MEC function, and another device in the embodiment shown in any one of FIG. 9 to FIG. 17.

In an example, the processing module 2210 is configured to determine a first computing capability of a first MEC function, where the first MEC function is disposed inside the communication apparatus or the first MEC function is independent of the communication apparatus, and the computing capability of the first MEC function is for indicating a computing service that can be provided by the first MEC function;
the transceiver module 2220 is configured to send first capability information, where the first capability information is for indicating the first computing capability of the first MEC function; and
the transceiver module 2220 further receives a first task request message from a first terminal, where the first task request message is for requesting the first MEC function to execute at least one computing task of the first terminal, and the at least one computing task is determined based on the first capability information.

In a possible implementation, the transceiver module 2220 is configured to send a first request message to the first MEC function, where the first request message is for requesting to obtain the computing capability of the first MEC function; and the transceiver module 2220 is configured to receive a first response message from the first MEC function, where the first response message includes a capability parameter, the capability parameter is for determining the first computing capability of the first MEC function, and the capability parameter includes one or more of a supported computing service type, a hardware parameter, and computing load.

In a possible implementation, the transceiver module 2220 is configured to send a second request message to the first MEC function, where the second request message is for requesting to establish a connection to the first MEC function; and the transceiver module 2220 is configured to receive a second response message from the first MEC function, where the second response message includes a capability parameter, the capability parameter is for determining the first computing capability of the first MEC function, and the capability parameter includes one or more of a supported computing service type, a hardware parameter, and computing load.

In a possible implementation, the transceiver module 2220 is configured to receive a first update message from the first MEC function, where the first update message includes related information of the first computing capability of the first MEC function.

In a possible implementation, the transceiver module 2220 is further configured to receive a third request message from the first terminal, where the third request message is for requesting to obtain a computing capability of an MEC function.

In a possible implementation, the transceiver module 2220 is specifically configured to broadcast the first capability information.

In a possible implementation, the transceiver module 2220 is configured to send, if the processing module 2210 determines that the first computing capability of the first MEC function does not satisfy a computing requirement of the at least one computing task, the third task request message to a second network device, where the third task request message is for requesting the second network device to execute the at least one computing task; and the transceiver module 2220 is further configured to receive a response message from the second network device in response to the third task request message.

In a possible implementation, the processing module 2210 is further configured to determine whether a second computing capability of a second MEC function on a second network device side satisfies the computing requirement of the at least one computing task, where the second MEC function is disposed inside the second network device or the second MEC function is independent of the second network device, and the second computing capability of the second MEC function is notified by the second MEC function to the first MEC function.

In a possible implementation, the transceiver module 2220 is configured to: receive indication information from the first MEC function, where the indication information indicates a second terminal, and the second terminal provides a computing service; and forward the third task request message from the first terminal to the second terminal, where the third task request message is for requesting to execute the at least one computing task.

In another example, the transceiver module 2220 is configured to: receive first capability information from a first network device, where the first capability information is for indicating a first computing capability of a first MEC function, the first computing capability is for indicating a computing service that can be provided by the first MEC function, and the first MEC function is disposed inside the first network device or the first MEC function is independent of the first network device; send a first task request message to the first network device or the first MEC function, where the first task request message is for requesting to execute at least one computing task; and receive admission information, and send related data of the at least one computing task to the first MEC function based on the admission information.

In a possible implementation, the transceiver module 2220 is further configured to send a second request message to the first network device, where the second request message is for requesting to obtain a computing capability of an MEC function.

In a possible implementation, the processing module 2210 is configured to: determine, based on the first capability information, a camped-on cell, where the camped-on cell supports a computing service required by the communication apparatus; or hand over from a current camped-on cell to a neighboring cell based on the first capability information, where the current camped-on cell does not satisfy a computing service requirement of the communication apparatus, and the neighboring cell satisfies the computing service requirement of the communication apparatus.

In still another example, the processing module 2210 is configured to determine that a second terminal executes at least one computing task of a first network device or the communication apparatus, where the second terminal can provide a computing service, and the communication apparatus is disposed inside the first network device or the communication apparatus is independent of the first network device; and
the transceiver module 2220 is configured to: send a session request message to the first network device, where the session request message is for indicating the first network device to establish a first transmission channel between the first network device and the communication apparatus and establish a second transmission channel from the first network device to the second terminal; and send related data of the at least one computing task to the second terminal through the first transmission channel and the second transmission channel.

In a possible implementation, the transceiver module 2220 is configured to receive a registration request message from the second terminal, where the registration request message is for requesting the communication apparatus to register computing capability information of the second terminal, and the at least one computing task is determined based on the computing capability information.

In still another example, the transceiver module 2220 is configured to: send a registration request message to an MEC function, where the registration request message is for requesting the MEC function to register computing capability information of the communication apparatus, and the computing capability information is for indicating a computing service that can be provided by the communication apparatus; and receive a first task request message sent by a first network device, where the first task request message is for requesting to execute at least one task of the first network device or the MEC function, and the at least one computing task is determined based on the computing capability information.

In still another example, the processing module 2210 is configured to determine a second terminal, where the second terminal can provide a computing service; and
the transceiver module 2220 is configured to: send a first task request message to the second terminal, where the first task request message is for requesting the second terminal to execute at least one computing task of the communication apparatus; and receive admission information from the second terminal, and sends related data of the at least one computing task to the second terminal based on the admission information.

In a possible implementation, the processing module 2210 is specifically configured to: broadcast MEC service information by using the transceiver module 2220, where the MEC service information includes a computing requirement parameter of the at least one task; and receive a response message from a terminal in response to the MEC service information by using the transceiver module 2220, and determine the terminal as the second terminal.

In a possible implementation, the processing module 2210 is specifically configured to: send the first task request message to the first network device by using the transceiver module 2220; and receive a first response message from the first network device, where the first response message includes information about the second terminal.

In still another example, the transceiver module 2220 is configured to: broadcast the computing capability information, where the communication apparatus can provide a computing service, and the computing capability information is for indicating a second computing capability of the communication apparatus; and receive a first task request message from a first terminal, where the first task request message is for requesting to execute at least one computing task of the first terminal.

In a possible implementation, the transceiver module 2220 is further configured to send the computing capability information to an MEC function.

In still another example, the transceiver module 2220 is configured to: receive a first task request message from a first terminal, where the first task request message is for requesting to execute a computing task of the first terminal; and send a second task request message to at least one edge computing device, where the second task request message corresponding to each edge computing device is for requesting the edge computing device to execute some computing subtasks in the computing task, a plurality of computing subtasks included in the computing task have a logical relationship, the at least one edge computing device includes a second MEC function and/or a second terminal, and the second terminal can provide a computing service.

In a possible implementation, the first request message includes one or more of the following information:
the plurality of computing subtasks, the logical relationship between the plurality of computing subtasks, and a service requirement of each of the plurality of computing subtasks.

In a possible implementation, the processing module 2210 is configured to divide the computing task into the plurality of SFC-based computing subtasks, where the second task request message includes first information and second information, the first information is for indicating the plurality of computing subtasks, and the second information is for indicating the logical relationship between the plurality of computing subtasks.

In a possible implementation, the transceiver module 2220 is configured to receive a registration request message from a second terminal, where the registration request message is for requesting to register a computing capability of the second terminal and computing load of the second terminal, and the second terminal can provide a computing service.

In still another example, the transceiver module 2220 is configured to send a first task request message to a first MEC function, where the first task request message is for requesting to execute a computing task of the first terminal.

In a possible implementation, the first request message includes one or more of the following information:
the plurality of computing subtasks, the logical relationship between the plurality of computing subtasks, and a service requirement of each of the plurality of computing subtasks.

In still another example, the transceiver module 2220 is configured to receive first information, where the first information is for indicating a mapping relationship between a protocol data unit (protocol data unit) PDU session established by a terminal and a computing server; and
the processing module 2210 is configured to process related data of at least one computing task from the terminal based on the mapping relationship.

In a possible implementation, a packet filtering rule PDR is configured for the network device, and the PDR is for ensuring that a data flow associated with the at least one computing task is mapped to a correct quality of service QoS flow.

In still another example, the processing module 2210 is configured to determine first information, where the first information includes a correspondence between a PDU session established by the communication apparatus and a remote server, and the first information is for indicating an MEC function to process related data of at least one computing task of the communication apparatus from the remote server; and
the transceiver module 2220 is configured to send the first information to the MEC function.

In a possible implementation, the transceiver module 2220 is configured to send a first task request message to the MEC function, where the first task request message is for requesting the MEC function to execute the at least one computing task of the communication apparatus, and the first task request message includes related information of the remote server.

In a possible implementation, the transceiver module 2220 is configured to receive a first task request response message sent by the MEC function, where the first task request response message includes related information of a computing server selected by the MEC function.

It should be understood that, in this embodiment of this application, the processing module 2210 may be implemented as a processor or a processor-related circuit component, and the transceiver module 2220 may be implemented as a transceiver or a transceiver-related circuit component, or a communication interface.

It should be understood that, in this embodiment of this application, the processing module 2210 may be implemented as a processor or a processor-related circuit component, and the transceiver module 2220 may be implemented as a transceiver or a transceiver-related circuit component, or a communication interface.

FIG. 23 shows a communication apparatus 2300 according to an embodiment of this application. The communication apparatus 2300 may be a terminal, and can implement functions of the terminal in the method provided in embodiments of this application. Alternatively, the communication apparatus 2300 may be a network device, and can implement functions of the network device in the method provided in embodiments of this application. Alternatively, the communication apparatus 2300 may be an apparatus that can support the terminal in implementing corresponding functions in the method provided in embodiments of this application, or an apparatus that can support the network device in implementing corresponding functions in the method provided in embodiments of this application. The communication apparatus 2300 may be a chip or a chip system. In this embodiment of this application, the chip system may include a chip, or may include a chip and another discrete component.

In hardware implementation, the transceiver module 820 may be a transceiver. The transceiver is integrated into the communication apparatus 2300 to form a communication interface 2310.

The communication apparatus 2300 includes at least one processor 2320, configured to implement or support the communication apparatus 2300 in implementing the functions of the network device or the terminal in the method provided in embodiments of this application. For details, refer to detailed descriptions in the method example. Details are not described herein again.

The communication apparatus 2300 may further include at least one memory 2330, configured to store program instructions and/or data. The memory 2330 is coupled to the processor 2320. The coupling in this embodiment of this application may be an indirect coupling or a communication connection between apparatuses, units, or modules in an electrical form, a mechanical form, or another form, and is used for information exchange between the apparatuses, the units, or the modules. The processor 2320 may cooperate with the memory 2330. The processor 2320 may execute the program instructions and/or the data stored in the memory 2330, so that the communication apparatus 2300 implements a corresponding method. At least one of the at least one memory may be included in the processor.

The communication apparatus 2300 may further include a communication interface 2310, configured to communicate with another device by using a transmission medium, so that an apparatus in the communication apparatus 2300 may communicate with the another device. For example, when the communication apparatus is a terminal, the another device is a network device. Alternatively, when the communication apparatus is a network device, the another device is a terminal. The processor 2320 may send and receive data through the communication interface 2310. The communication interface 2310 may be specifically a transceiver.

In this embodiment of this application, a specific connection medium between the communication interface 2310, the processor 2320, and the memory 2330 is not limited. In this embodiment of this application, the memory 2330, the processor 2320, and the communication interface 2310 are connected by using a bus 2340 in FIG. 23. The bus is represented by using a thick line in FIG. 23. A connection manner between other components is merely an example for description, and is not limited thereto. The bus may be classified into an address bus, a data bus, a control bus, and the like. For ease of representation, only one thick line is for represent the bus in FIG. 23, but this does not mean that there is only one bus or only one type of bus.

In embodiments of this application, the processor 2320 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 2330 may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in a terminal, or another combined component, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

An embodiment of this application further provides a communication system. Specifically, the communication system includes a network device and a terminal device, or may include a plurality of network devices and a plurality of terminals. For example, the communication system includes a network device and a terminal that are configured to implement related functions in any one of the embodiments in FIG. 4 to FIG. 7.

The network device is separately configured to implement some functions of any related device in any one of the embodiments in FIG. 9 to FIG. 17. For details, refer to the related descriptions in the method embodiment. Details are not described herein again.

An embodiment of this application further provides a computer-readable storage medium, including instructions. When the instructions are run on a computer, the computer is enabled to perform the method performed by any related device in any one of the embodiments in FIG. 9 to FIG. 17.

An embodiment of this application further provides a computer program product, including instructions. When the instructions are run on a computer, the computer is enabled to perform the method performed by any related device in any one of the embodiments in FIG. 9 to FIG. 17.

An embodiment of this application provides a chip system. The chip system includes a processor and may further include a memory, and is configured to implement a function of any related device in any embodiment of FIG. 9 to FIG. 17 in the foregoing methods; or configured to implement a function of any related device in any embodiment of FIG. 9 to FIG. 17 in the foregoing methods. The chip system may include a chip, or may include a chip and another discrete component.

It should be understood that the terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely used to distinguish between different indication information, and do not indicate different priorities, importance, or the like of the two types of information.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "for example" in embodiments of this application is for represent an example or a description. Any embodiment or implementation solution described as an "example" in embodiments of this application should not be explained as being more preferred than another embodiment or implementation solution. In other words, using the word "example" is intended to describe a concept in a specific manner.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network edge computing method, comprising:
determining, by a first network device, a first computing capability of a first multi-access edge computing MEC function, wherein the first computing capability of the first MEC function is for indicating a capability of the first MEC function to provide a computing service;
sending, by the first network device, first capability information, wherein the first capability information comprises a capability parameter for determining the first computing capability, and the capability parameter comprises one or more of a supported computing service type, a hardware parameter, and computing load;
receiving, by the first network device, a first task request message from a first terminal, wherein the first task request message is for requesting the first MEC function to execute at least one computing task of the first terminal, and the at least one computing task is determined based on the first capability information; and
sending, by the first network device, the first task request message to the first MEC function.

2. The method according to claim 1, further comprising:
receiving, by the first network device, a second request message from the first terminal, wherein the second request message is for requesting to obtain a computing capability of an MEC function.

3. The method according to claim 1 or 2, wherein the sending, by the first network device, first capability information comprises:
broadcasting, by the first network device, the first capability information.

4. The method according to any one of claims 1 to 3, wherein the determining, by a first network device, a first computing capability of a first MEC function comprises:
sending, by the first network device, a first request message to the first MEC function, wherein the first request message is for requesting to obtain the first computing capability of the first MEC function; and
receiving, by the first network device, a first response message from the first MEC function, wherein the first response message comprises the capability parameter.

5. The method according to any one of claims 1 to 3, wherein the determining, by a first network device, a first computing capability of a first MEC function comprises:
sending, by the first network device, the second request message to the first MEC function, wherein the second request message is for requesting the first network device to establish a connection to the first MEC function; and
receiving, by the first network device, a second response message from the first MEC function, wherein the second response message comprises the capability parameter.

6. The method according to any one of claims 1 to 3, wherein the determining, by a first network device, a first computing capability of a first MEC function comprises:
receiving, by the first network device, a first update message from the first MEC function, wherein the first update message comprises information related to the first computing capability of the first MEC function.

7. The method according to any one of claims 1 to 6, further comprising:
sending, by the first network device if the first network device determines that the first computing capability of the first MEC function does not satisfy a computing requirement of the at least one computing task, the first task request message to a second network device; and
receiving, by the first network device, a response message from the second network device in response to the first task request message.

8. The method according to claim 7, further comprising:
determining, by the first network device, whether a second computing capability of a second MEC function on a second network device side satisfies the computing requirement of the at least one computing task, wherein the second computing capability of the second MEC function is notified by the second MEC function to the first MEC function.

9. The method according to any one of claims 1 to 3, further comprising:
receiving, by the first network device, indication information from the first MEC function, wherein the indication information indicates a second terminal, and the second terminal provides a computing service; and
forwarding, by the first network device, a second task request message from the first terminal to the second terminal, wherein the second task request message is for requesting to execute the at least one computing task.

10. A network edge computing method, comprising:
receiving, by a first terminal, first capability information from a first network device, wherein the first capability information is for indicating a first computing capability of a first MEC function, the first computing capability is for indicating a capability of the first MEC function to provide a computing service, the first capability information comprises a capability parameter for determining the first computing capability, and the capability parameter comprises one or more of a supported computing service type, a hardware parameter, and computing load;
sending, by the first terminal, a first task request message to the first network device or the first MEC function, wherein the first task request message is for requesting to execute at least one computing task; and
receiving, by the first terminal, admission information from the first MEC function, and sending related data of the at least one computing task to the first MEC function based on the admission information.

11. The method according to claim 10, further comprising:
sending, by the first terminal, a second request message to the first network device, wherein the second request message is for requesting to obtain a computing capability of an MEC function.

12. The method according to claim 10 or 11, further comprising:
determining, by the first terminal based on the first capability information, a camped-on cell, wherein the camped-on cell supports a computing service required by the first terminal; or
handing over, by the first terminal, from a current camped-on cell to a neighboring cell based on the first capability information, wherein the current camped-on cell does not satisfy a computing service requirement of the first terminal, and the neighboring cell satisfies the computing service requirement of the first terminal.

13. The method according to claim 11, wherein the second request message is a network edge capability enquiry request message; or the second request message is an on-demand system message.

14. A communication apparatus, comprising a transceiver module and a processing module, wherein
the processing module is configured to determine a first computing capability of a first multi-access edge computing MEC function, wherein the first computing capability of the first MEC function is for indicating a capability of the first MEC function to provide a computing service;
the transceiver module is configured to send first capability information, wherein the first capability information comprises a capability parameter for determining the first computing capability, and the capability parameter comprises one or more of a supported computing service type, a hardware parameter, and computing load;
the transceiver module is further configured to receive a first task request message from a first terminal, wherein the first task request message is for requesting the first MEC function to execute at least one computing task of the first terminal, and the at least one computing task is determined based on the first capability information; and
the transceiver module is further configured to send the first task request message to the first MEC function.

15. The communication apparatus according to claim 14, wherein the transceiver module is further configured to receive a second request message from the first terminal, wherein the second request message is for requesting to obtain a computing capability of an MEC function.

16. The communication apparatus according to claim 14 or 15, wherein the transceiver module is specifically configured to broadcast the first capability information.

17. The communication apparatus according to any one of claims 14 to 16, wherein the transceiver module is specifically configured to:
send a first request message to the first MEC function, wherein the first request message is for requesting to obtain the first computing capability of the first MEC function; and
receive a first response message from the first MEC function, wherein the first response message comprises the capability parameter.

18. The communication apparatus according to any one of claims 14 to 16, wherein the transceiver module is specifically configured to:
send, by the communication apparatus, the second request message to the first MEC function, wherein the second request message is for requesting the communication apparatus to establish a connection to the first MEC function; and
receive, by the communication apparatus, a second response message from the first MEC function, wherein the second response message comprises the capability parameter.

19. The communication apparatus according to any one of claims 14 to 16, wherein the transceiver module is specifically configured to:
receive, by the communication apparatus, a first update message from the first MEC function, wherein the first update message comprises information related to the first computing capability of the first MEC function.

20. The communication apparatus according to any one of claims 14 to 19, wherein the transceiver module is further configured to:
send, when the processing module determines that the first computing capability of the first MEC function does not satisfy a computing requirement of the at least one computing task, the first task request message to a second network device; and
receive a response message from the second network device in response to the first task request message.

21. The communication apparatus according to claim 20, wherein the processing module is further configured to:
determine whether a second computing capability of a second MEC function on a second network device side satisfies the computing requirement of the at least one computing task, wherein the second computing capability of the second MEC function is notified by the second MEC function to the first MEC function.

22. The communication apparatus according to any one of claims 14 to 16, wherein the transceiver module is further configured to:
receive indication information from the first MEC function, wherein the indication information indicates a second terminal, and the second terminal provides a computing service; and
forward a second task request message from the first terminal to the second terminal, wherein the second task request message is for requesting to execute the at least one computing task.

23. A communication apparatus, comprising a transceiver module and a processing module, wherein
the transceiver module is configured to receive first capability information from a first network device, wherein the first capability information is for indicating a first computing capability of a first MEC function, the first computing capability is for indicating a capability of the first MEC function to provide a computing service, the first capability information comprises a capability parameter for determining the first computing capability, and the capability parameter comprises one or more of a supported computing service type, a hardware parameter, and computing load;
the transceiver module is configured to send a first task request message determined by the processing module to the first network device or the first MEC function, wherein the first task request message is for requesting to execute at least one computing task; and
the transceiver module is configured to: receive admission information from the first MEC function, and send related data of the at least one computing task to the first MEC function based on the admission information.

24. The communication apparatus according to claim 23, wherein the transceiver module is further configured to:
send, by the communication apparatus, a second request message to the first network device, wherein the second request message is for requesting to obtain a computing capability of an MEC function.

25. The communication apparatus according to claim 23 or 24, wherein the processing module is further configured to:
determine, by the communication apparatus based on the first capability information, a camped-on cell, wherein the camped-on cell supports a computing service required by the communication apparatus; or
hand over, by the first terminal, from a current camped-on cell to a neighboring cell based on the first capability information, wherein the current camped-on cell does not satisfy a computing service requirement of the first terminal, and the neighboring cell satisfies the computing service requirement of the first terminal.

26. The communication apparatus according to claim 24, wherein the second request message is a network edge capability enquiry request message; or the second request message is an on-demand system message.

27. A communication apparatus, wherein the communication apparatus comprises a processor and a memory, the memory is configured to store a computer program, and the processor is configured to execute the computer program stored in the memory, to enable the apparatus to perform the method according to any one of claims 1 to 9 or 10 to 13.

28. A communication apparatus, wherein the communication apparatus comprises a processor and a communication interface, the communication interface is configured to input and/or output information, and the processor is configured to execute a computer program, to enable the apparatus to perform the method according to any one of claims 1 to 9 or 10 to 13.

29. A computer-readable storage medium, wherein the computer-readable storage medium stores a computer program, and when the computer program is executed by a computer, the computer is enabled to perform the method according to any one of claims 1 to 9 or 10 to 13.
